# EUROPÄISCHE PATENTSCHRIFT

(11) **EP 3 547 000 B1**
(45) Veröffentlichungstag und Bekanntmachung des Hinweises auf die Patenterteilung: **08.07.2026**
(21) Anmeldenummer: 19154679.5
(22) Anmeldetag: 31.01.2019
(51) Int. Cl.: G02B 6/44, G02B 6/50

(54) **ZUGENTLASTUNGSVORRICHTUNG**
STRAIN RELIEF DEVICE
DISPOSITIF DE RELÂCHEMENT DE TENSION

(30) Priorität: 28.03.2018 DE 102018107466
(43) Veröffentlichungstag der Anmeldung: 02.10.2019
(73) Patentinhaber: Stark, Elena, 85247 Schwabhausen (DE)
(72) Erfinder: Stark, Ingo, 85247 Schwabhausen (DE)
(74) Vertreter: Wittmann, Ernst-Ulrich

(56) Entgegenhaltungen:
- EP-A1- 2 770 358
- EP-A1- 2 950 125
- EP-A2- 1 467 458
- WO-A1-2016/210139
- DE-A1- 102013 111 835
- DE-A1- 19 820 027
- US-A- 6 035 090
- US-A1- 2011 033 157
- US-A1- 2013 233 612
- ANONYMOUS: "Vollversion WGT 5/7/10/12/14/16/20 Wasser Gas Termination", 2018, Schwabhausen, XP055607364, Retrieved from the Internet <URL:https://www.elitex-gmbh.de/app/download/10594696352/MA-WGT%20Elitex%20Vollversion%201.3.pdf?t=1558981803> [retrieved on 20190719]

## Beschreibung

Die Erfindung betrifft eine Zugentlastungsvorrichtung, welche mit einer Endkappe und somit mit einem durch die Endkappe abdeckbaren und/oder abschließbaren Rohrs verbindbar ist. Die erfindungsgemäße Zugentlastungsvorrichtung ist z.B. mit einem durch die Endkappe abdeckbaren und/oder abschließbaren Glasfaser-Verlegerohr verbindbar, welches insbesondere ein Teil eines Glasfaser-Kabels ist.

Üblicherweise weist ein Glasfaser-Kabel wenigstens ein Glasfaser-Bündeladerkabel und ein Glasfaser-Verlegerohr auf, welches das Glasfaser-Bündeladerkabel teilweise seitlich umgibt. Das Glasfaser-Bündeladerkabel umfasst eine Vielzahl von Glasfasern, welche durch einen Kabelmantel seitlich umgeben werden. Das Glasfaser-Bündeladerkabel kann auch einen Mandrin, eine Reißleine, welche das Abmanteln des Glasfaser-Bündeladerkabels vereinfacht, und eine Verstärkungsfaser, welche zur Verstärkung des Glasfaser-Bündeladerkabels dient, aufweisen.

Die Glasfaser-Verlegerohre - die auf Grund ihrer Farbmarkierung gut voneinander zu unterscheiden sind - werden verlegt und an der Ein- bzw. Austrittsstelle zu einem Verteilerkasten für Glasfaser-basierte Kommunikationsanlagen abgeschlossen. Anschließend werden in diese Rohre die Glasfaser-Bündeladerkabel mittels Druckluft eingebracht. Die Glasfasern kommen dann im Verteilerkasten an und können dort nach Bedarf verbunden werden.

Glasfaser-Verlegerohre, die verlegt wurden, aber noch nicht benötigt werden, werden an einem Verteilerkasten mit einer Endkappe abgeschlossen, um u.a. das Eindringen von Schmutz und Feuchtigkeit zu verhindern. Es gibt somit zwei Arten von Endkappen, die in einem Verteilerkasten benötigt werden: Geschlossene Endkappen, um die unbenutzten Glasfaser-Verlegerohre zu schützen und offene Endkappen, durch welche die Glasfaser-Bündeladerkabel in den Verteilerkasten gezogen werden.

Offene Endkappen zum Anschließen eines Rohrs, z.B. eines Glasfaser-Verlegerohrs, sind im Stand der Technik bekannt. Eine im Stand der Technik bekannte offene Endkappe erstreckt sich entlang einer Längsachse und weist ein im Wesentlichen zylindrisches Aufnahmeteil auf, welches eine Stirnfläche und einen Bedienkopf umfasst und in welchem das Glasfaser-Verlegerohr einführbar ist. Der Bedienkopf umfasst eine konzentrische Öffnung zur Durchführung eines Glasfaser-Bündeladerkabels.

Im montierten Zustand der Endkappe mit einem Glasfaser-Kabel stimmen die Längsachse und die Achse des Glasfaser-Verlegerohrs in Wesentlichen miteinander überein. Außerdem erstreckt sich ein Stirnende des Glasfaser-Bündeladerkabels durch die konzentrische Öffnung hindurch. Außerdem ist ein Stirnende des Glasfaser-Verlegerohrs in dem Aufnahmeteil aufgenommen. Das Aufnahmeteil ist mit dem Stirnende des Glasfaser-Verlegerohrs formschlüssig und/oder kraftschlüssig verbunden, insbesondere fest oder lösbar fest verbunden, beispielsweise an dem Stirnende des Glasfaser-Verlegerohrs eingeschraubt.

Üblicherweise wird die Endkappe an dem Glasfaser-Kabel nach dem Einführen des Glasfaser-Kabels in dem Verteilerkasten verbunden, d.h. erfolgt die Verbindung zwischen der Endkappe und dem Glasfaser-Kabel in dem Verteilerkasten, welcher diese Montage räumlich einschränkt.

Nach der Montage der Endkappe mit dem Glasfaser-Verlegerohr ist es wichtig, das Rutschen des Glasfaser-Bündeladerkabels durch das Glasfaser-Verlegerohr zu verhindern und somit die genaue Anordnung und Einführung des Glasfaser-Bündeladerkabels in dem Verteilerkasten zu bewahren. Es ist somit wichtig eine Verschiebung des Glasfaser-Bündeladerkabels in Bezug auf das Glasfaser-Verlegerohr entlang der Achse des Glasfaser-Verlegerohrs wenigsten teilweise zu verhindern.

Im Stand der Technik ist eine Dichtung verwendet, welche an der Stirnfläche koaxial mit der konzentrischen Öffnung angeordnet ist. Insbesondere ist die Dichtung so angeordnet, dass im montierten Zustand der Endkappe mit dem Glasfaser-Kabel die Dichtung das Glasfaser-Bündeladerkabel umgeben und in Kontakt mit dem Stirnende des Glasfaser-Bündeladerkabels und der Stirnfläche der Endkappe kommt. Dadurch wird eine Formschluss- und/oder Kraftschlussverbindung zwischen dem Glasfaser-Verlegerohr und der Dichtung bereitstellt. Die Reibung zwischen dem Glasfaser-Bündeladerkabel und der Dichtung verhindert wenigstens teilweise die o.g. Verschiebung des Glasfaser-Bündeladerkabels in Bezug auf das Glasfaser-Verlegerohr.

DE 198 20 027 A1 beschreibt eine Abfangvorrichtung für ein optisches oder LWL-Kabel mit einem das Zentralelement und die Aramidfasern fixierendes Klemmteil, sowie ein mit einer Manschette ausgestattetes Abfangelement. Das Klemmteil ist am Abfangelement befestigt. Das Abfangelement ist mit einer Kabelmuffe verschraubt.

US 6 035 090 A beschreibt eine Endstruktur für ein Lichtwellenleiterkabel, die ein Kappenelement enthält, das die Gefahr des Durchschneidens eines Verstärkungselements selbst dann ausschließt, wenn äußere Kräfte auf das Lichtwellenleiterkabel einwirken und die ein leichtes Wiedereinrasten eines Eingriffselements und einer äußeren Ummantelung des Lichtwellenleiterkabels ermöglicht. Die Endstruktur des faseroptischen Kabels umfasst ein im Wesentlichen zylindrisches Kappenelement. Das Kappenelement hat im Inneren einen Hohlraum und außerdem eine gekrümmte Oberfläche an einer Endfläche. Die gekrümmte Oberfläche bietet eine glatte Fortsetzung zwischen einer Innenfläche und einer Außenfläche. Das Verstärkungselement eines optischen Faserkabels, das durch den Hohlraum geführt und entlang der gekrümmten Oberfläche zurückgefaltet wird, kann an der Außenfläche durch das Einpressen eines Hülsenelements auf die Außenfläche befestigt werden. Ein Eingriffselement, das mit einer äußeren Ummantelung des optischen Faserkabels in Eingriff steht, steht von der hinteren Oberfläche des Kappenelements vor.

EP 2 950 125 A1 beschreibt eine torsionsfeste Kabelverschraubung zur Reduzierung der Torsion eines optischen Kabels, die teilweise in einen Sockel eines optischen Verbindungsverschlusses eingesetzt werden kann. Die Kabelverschraubung umfasst einen zentralen Körper, der sich in Längsrichtung entlang einer Längsrichtung (X-X) zwischen einem ersten Ende und einem zweiten Ende erstreckt und so ausgebildet ist, dass er das durch diese Enden hindurchgehende optische Kabel aufnimmt, wobei, wenn der zentrale Körper teilweise in den optischen Verbindungsverschluss eingeführt wird, das erste Ende innerhalb des Innenvolumens des optischen Verbindungsverschlusses positioniert ist und das zweite Ende außerhalb des optischen Verbindungsverschlusses zur Aufnahme einer Klemmmutter positioniert ist. Die Kabelverschraubung umfasst auch ein Kabel-Anti-Torsionselement, das am zweiten Ende des Zentralkörpers angebracht ist und mit der Klemmmutter zusammenwirkt, so dass, wenn die Klemmmutter auf das zweite Ende geschraubt wird, das Kabel-Anti-Torsionselement verhindert, dass sich das Kabel in Bezug auf den Zentralkörper dreht.

Weiterer Stand der Technik ist in den Dokumenten EP 1 467 458 A2, US 2013/233612 A1, EP 2 770 358 A1 und US 2011/033157 A1 diskutiert.

Ausgehend von diesem Stand der Technik ist es Aufgabe der vorliegenden Erfindung, zumindest die Nachteile des Stands der Technik wenigstens teilweise zu überwinden bzw. zu verbessern und insbesondere die Verhinderung der o.g. Verschiebung wenigstens teilweise zu erreichen bzw. zu erhöhen. Die Aufgabe wird durch eine Vorrichtung gemäß Anspruch 1 gelöst. Bevorzugte Ausführungsformen und Abwandlungen sind Gegenstand der Unteransprüche.

Die Erfindung betrifft eine Vorrichtung umfassend eine Zugentlastungsvorrichtung und eine Endkappe, mit den Merkmalen des Patentanspruchs 1.

Die Zugentlastungsvorrichtung umfasst einen Körper, welcher sich entlang einer Haupterstreckungsrichtung erstreckt, eine Befestigungseinrichtung und eine Eingriffseinrichtung. Die Eingriffseinrichtung ist derart ausgestaltet und an dem Körper angeordnet, dass im montierten Zustand der Zugentlastungsvorrichtung mit einer sich entlang einer Längsachse erstreckenden Endkappe, die Eingriffseinrichtung und ein entsprechender Endkappenverbindungsbereich der Endkappe, welcher in der Form einer Endkappeneingriffseinrichtung ist, zusammenwirken. Die Eingriffseinrichtung und die Endkappeneingriffseinrichtung der Endkappe stellen eine Formschluss- und/oder Kraftschlussverbindung bereit, welche eine Verschiebung der Zugentlastungsvorrichtung in Bezug auf die Endkappe wenigstens entlang der Haupterstreckungsrichtung wenigstens teilweise verhindern beispielsweise beschränken. Im montierten Zustand der Zugentlastungsvorrichtung mit der Endkappe, sind die Haupterstreckungsrichtung des Körpers und die Längsachse der Endkappe im Wesentlichen parallel zueinander angeordnet und ein Haltefaden ist an der Befestigungseinrichtung wenigstens kraftschlüssig befestigbar.

Beispielsweise sind die o.g. Formschluss- und/oder die o.g. Kraftschlussverbindung eine Verbindungsart, bei welcher die beiden im Wesentlichen zueinander koaxial anordbaren Bauteile (Zugentlastungsvorrichtung und Endkappe) so miteinander verbindbar sind, dass eine unbeabsichtigte Trennung der beiden möglichst vermieden wird.

Der Haltefaden ist an der Befestigungseinrichtung z.B. mittels eines Knotens und/oder mittels der Reibung, zwischen dem Haltefaden und der Befestigungseinrichtung kraftschlüssig befestigbar.

Insbesondere ist der Haltefaden ein Seil, ein Draht und/oder oder eine Kordel. Der Haltefaden kann eine Verstärkungsfaser zur Verstärkung eines Bündeladerkabels von Glasfasern sein. Beispielsweise ist der Haltefaden ein Glas-, Kohle-,Aramid-, und/oder Kohle/Aramid-Band. Außerdem kann der Haltefaden ein Glas-, Kohle-,Aramid- und/oder Kohle/Aramid-Roving sein. Außerdem kann der Haltefaden eine Reißleine eines Bündeladerkabels von Glasfasern sein.

Wie oben beschrieben, ist die Endkappe an einem Glasfaser-Kabel montierbar und insbesondere mit dem Glasfaser-Verlegerohr lösbar fest verbindbar, z.B. einschraubbar. Nach und/oder vor der Montage der Endkappe an dem Glasfaser-Kabel ist außerdem die erfindungsgemäße Zugentlastungsvorrichtung mit der Endkappe durch die Eingriffseinrichtung verbindbar.

Ist die Endkappe mit der Zugentlastungsvorrichtung durch die o.g. Verschiebung-verhindernde Formschluss- und/oder Kraftschlussverbindung und mit dem Glasfaser-Kabel durch die o.g. lösbare feste Verbindung verbunden, kann das Glasfaser-Bündeladerkabel wenigstens teilweise abgemantelt werden und die Reißleine und/oder dieVerstärkungsfaser können z.B. mittels eines Knotens an der Befestigungseinrichtung kraftschlüssig befestig und somit wenigstens teilweise fest verbunden werden.

Dadurch wird eine Verbindung zwischen dem Glasfaser-Bündeladerkabel und dem Glasfaser-Verlegerohr bereitgestellt, welche eine Verschiebung dem Glasfaser-Bündeladerkabel in Bezug auf das Glasfaser-Verlegerohr entlang der Haupterstreckungsrichtung wenigstens teilweise verhindert.

Die erfindungsgemäße Zugentlastungsvorrichtung ermöglicht somit das Rutschen des Glasfaser-Bündeladerkabels durch das Glasfaser-Verlegerohr zuverlässig und effizient zu verhindern ohne Bedarf, Dichtungen zu verwenden. Dies *i.a.* vereinfacht die Montage der Endkappe an dem Glasfaser-Kabel, da keine Dichtung an der Stirnfläche und koaxial mit der konzentrischen Öffnung der Endkappe genau angeordnet muss.

Eine Ausführungsform der erfindungsgemäßen Zugentlastungsvorrichtung ist mit einer Kabelanlage verbindbar. Insbesondere weist die Kabelanlage ein im Wesentlichen zylinderförmiges Rohr und die Endkappe auf, welche mit dem Rohr verbunden und insbesondere auf eine Stirnkante des Rohrs aufgesetzt ist. Beispielsweise ist die Kabelanlage eine Glasfaser-Kabelanlage und somit das Rohr ist ein Glasfaser-Verlegerohr, welche z.B. ein Glasfaser-Bündeladerkabel seitlich umgibt.

Die Eingriffseinrichtung ist derart ausgestaltet und an dem Körper angeordnet, dass im montierten Zustand der Zugentlastungsvorrichtung mit der Kabelanlage, die Eingriffseinrichtung und die entsprechende Endkappeneingriffseinrichtung der Endkappe zusammenwirken. Die Eingriffseinrichtung und die Endkappeneingriffseinrichtung der Endkappe stellen die o.g. Formschluss- und/oder Kraftschlussverbindung bereit, welche eine Verschiebung der Zugentlastungsvorrichtung in Bezug auf die Endkappe wenigstens entlang der Haupterstreckungsrichtung wenigstens teilweise verhindern beispielsweise beschränken.

Im montierten Zustand der Zugentlastungsvorrichtung mit der Kabelanlage, sind außerdem die Haupterstreckungsrichtung des Körpers und die Längsachse der Endkappe im Wesentlichen parallel zueinander angeordnet und ein Haltefaden ist an der Befestigungseinrichtung wenigstens kraftschlüssig befestigbar.

Insbesondere kann die Kabelanlage den Haltefaden aufweisen. Ist beispielsweise die Kabelanlage eine Glasfaser-Kabelanlage, kann der Haltefaden eine Verstärkungsfaser zur Verstärkung des Glasfaser-Bündeladerkabels sein. Beispielsweise ist der Haltefaden ein Glas-, Kohle-, Aramid, und/oder Kohle/Aramid-Band. Außerdem kann der Haltefaden ein Glas-, Kohle-, Aramid, und/oder Kohle/Aramid-Roving sein. Darüber hinaus kann der Haltefaden eine Reißleine des Glasfaser-Bündeladerkabels sein.

Nach der erfindungsgemäßen Zugentlastungsvorrichtung weist die Eingriffseinrichtung wenigstens ein Rastelement auf. In einer weiteren Ausführungsform weist die Eingriffseinrichtung wenigstens eine Nut, eine Durchführung und/oder einen Rücksprung auf. Insbesondere weist die Eingriffseinrichtung wenigstens eine Rille, eine Rundrille oder einen Vorsprung auf.

Das Eingriffselement, insbesondere das Rastelement, die Nut, die Durchführung der Rücksprung, die Rille, die Rundrille und/oder der Vorsprung, erstrecken sich wenigstens im Wesentlichem parallel zur Haupterstreckungsrichtung des Körpers.

Diese ist eine kostengünstige Bauweise, die eine leicht durchzuführende, durch das Eingriffselement gesicherte Verbindung ermöglicht und eine effiziente und stabile Verhinderung der Verschiebung der Zugentlastungsvorrichtung in Bezug auf die Endkappe gewährleistet.

Im montierten Zustand der Zugentlastungsvorrichtung mit der Endkappe, kann insbesondere das Eingriffselement die Endkappeneingriffseinrichtung zusammenwirken und eine lösbare Formschluss- und/oder Kraftschlussverbindung bereitstellen, welche eine Verschiebung der Zugentlastungsvorrichtung in Bezug auf die Endkappe wenigstens entlang der Haupterstreckungsrichtung wenigstens teilweise verhindert bzw. beschränken. In diesem Fall ist es möglich, bei Bedarf die Zugentlastungsvorrichtung von der Endkappe zu lösen. Die erfindungsgemäße Zugentlastungsvorrichtung kann somit wiederverwendet werden, wodurch die Montagekosten wenigstens teilweise verringert werden.

Alternativ oder begleitend kann das Eingriffselement, insbesondere das Rastelement, die Nut, die Durchführung, der Rücksprung, die Rille, die Rundrille und/oder der Vorsprung, sich entlang einer ersten Querrichtung erstrecken. Nach der vorliegenden Erfindung liegt z.B. die erste Querrichtung in einer Ebene, welche im Wesentlichen senkrecht zur Haupterstreckungsrichtung ist. Die erste Querrichtung kann insbesondere eine gerade Linie oder eine Bogenlinie aufweisen oder sein.

Beispielsweise erstreckt sich das Eingriffselement, z.B. das Rastelement, die Nut, die Durchführung, der Rücksprung, die Rille, die Rundrille und/oder der Vorsprung, entlang einer Richtung, welche sich im Wesentlichen senkrecht zur Haupterstreckungsrichtung des Körpers erstreckt.

Insbesondere weist die Eingriffseinrichtung eine Vielzahl von Eingriffselemente auf, welche beispielsweise entlang eines ersten in Bezug auf die Haupterstreckungsrichtung der Zugentlastungsvorrichtung axialen Abschnittes oder entlang einer Vielzahl von in Bezug auf die Haupterstreckungsrichtung der Zugentlastungsvorrichtung axialen Abschnitten der Zugentlastungsvorrichtung angeordnet sind. Das Eingriffselement ist z.B. ein Rastelement, eine Nut, einen Rücksprung, eine Rille, eine Rundrille und/oder einen Vorsprung.

Nach der vorliegenden Erfindung liegt z.B. ein in Bezug auf die Haupterstreckungsrichtung axialer Abschnitt der Zugentlastungsvorrichtung in einer Ebene, welche einen Winkel mit der Haupterstreckungsrichtung bildet. Diese Ebene ist somit nicht im Wesentlichen parallel zur Haupterstreckungsrichtung. Solch ein axialer Abschnitt kann beispielsweise einen Abschnitt des Körpers der Zugentlastungsvorrichtung sein.

In einer Ausführungsform der Erfindung umfasst die Eingriffseinrichtung wenigstens eine Schraube, insbesondere eine Madenschraube und ein Eingriffselement in der Form einer ersten Durchführung. Die erste Durchführung umfasst ein innenliegendes Gewinde und erstreckt sich entlang einer Richtung, welche im Wesentlichen senkrecht zur Haupterstreckungsrichtung ist.

Im montierten Zustand der Zugentlastungsvorrichtung mit der Endkappe, ist die Schraube in der ersten Durchführung eingeschraubt. Die Schraube und die Endkappeneingriffseinrichtung wirkt zur Bereitstellung der Kraftschlussverbindung zusammen, welche eine Verschiebung der Zugentlastungsvorrichtung in Bezug auf die Endkappe entlang der Haupterstreckungsrichtung verhindert.

Beispielsweise umfasst die Endkappeneingriffseinrichtung eine zweite Durchführung, welche im montierten Zustand der Zugentlastungsvorrichtung mit der Endkappe der ersten Durchführung entspricht und in welcher die Schraube zur Bereitstellung der Kraftschlussverbindung eingeschraubt ist.

Die Eingriffseinrichtung einer Ausführungsform der Erfindung umfasst eine Nut und/oder einen Vorsprung, welche sich entlang eines zweiten in Bezug auf die Haupterstreckungsrichtung der Zugentlastungsvorrichtung axialen Abschnittes erstrecken. Insbesondere ist der Vorsprung als eine Feder geformt.

Im montierten Zustand der Zugentlastungsvorrichtung mit der Endkappe, können insbesondere diese Nut und/oder dieser Vorsprung mit einem entsprechenden Vorsprung bzw. einer entsprechenden Nut der Endkappe zusammenwirken, um die o.g. Formschluss- und/oder Kraftschlussverbindung bereitzustellen. Beispielsweise erstrecken der entsprechende Vorsprung und/oder die entsprechende Nut der Endkappe sich entlang eines ersten in Bezug auf die Längsachse axialen Abschnitt der Endkappe.

Nach der vorliegenden Erfindung liegt z.B. ein in Bezug auf die Längsachse axialer Abschnitt der Endkappe in einer Ebene, welche einen Winkel mit der Längsachse bildet. Diese Ebene ist somit nicht im Wesentlichen parallel zur Längsachse.

Dies ist eine kostengünstige Bauweise, welche eine leicht durchzuführende, durch die Nut und/oder den Vorsprung gesicherte Verbindung ermöglicht und eine effiziente und stabile Verhinderung der Verschiebung der Zugentlastungsvorrichtung in Bezug auf die Endkappe gewährleistet.

In diesem Fall wird auch die Herstellung der Endkappe vereinfacht, da eine Nut und/oder einen Vorsprung an einem zylindrischen Bauteil (wie. z.B. der Endkappe) relativ einfach herzustellen, insbesondere zu fräsen ist.

Nach einer Ausführungsform der erfindungsgemäßen Zugentlastungsvorrichtung ist die Eingriffseinrichtung derart ausgestaltet und an dem Körper angeordnet, dass im montierten Zustand der Zugentlastungsvorrichtung mit der Endkappe, die Eingriffseinrichtung und die Endkappeneingriffseinrichtung zusammenwirken und eine Formschluss- und/oder Kraftschlussverbindung bereitstellen, welche eine Drehung der Zugentlastungsvorrichtung in Bezug auf die Endkappe um die Haupterstreckungsrichtung wenigstens teilweise verhindern insbesondere beschränken.

Solch eine Formschluss- und/oder Kraftschlussverbindung kann beispielsweise durch eine Vielzahl von Eingriffselemente bereitgestellt werden, welche entlang des ersten in Bezug auf die Haupterstreckungsrichtung axialen Abschnittes angeordnet sind. Im montierten Zustand der Zugentlastungsvorrichtung mit der Endkappe wirken diese Eingriffselemente und entsprechenden Endkappeneingriffselemente der Endkappen zur Bereitstellung der o.g. Formschluss- und/oder Kraftschlussverbindung zusammen.

Die Eingriffselemente können insbesondere Vorsprünge sein, welche sich parallel zur Haupterstreckungsrichtung erstrecken. In diesem Fall sind die Endkappeneingriffselemente Rücksprünge, welche sich parallel zur Längsachse der Endkappe erstrecken und deren Form der Form der Vorsprünge entspricht. Im montierten Zustand der Zugentlastungsvorrichtung mit der Endkappe greift jeder Vorsprung der Zugentlastungsvorrichtung formschlüssig in einem entsprechenden Rücksprung der Endkappe ein.

Die o.g. Drehung-verhindernde Formschluss- und/oder Kraftschlussverbindung stellt eine Verbindung mit dem Glasfaser-Bündeladerkabel und dem Glasfaser-Verlegerohr bereit, welche eine Drehung des Glasfaser-Bündeladerkabels und/oder des Glasfaser-Verlegerohrs in Bezug auf einander und um die Achse des Glasfaser-Verlegerohrs wenigstens teilweise verhindert. Dies erhöht die Festigkeit der Verbindung zwischen dem Glasfaser-Bündeladerkabel und dem Glasfaser-Verlegerohr, wodurch das Bewahren der genauen Anordnung und Einführung des Glasfaser-Bündeladerkabels in dem Verteilerkasten vereinfacht wird.

Die Eingriffseinrichtung kann insbesondere derart ausgestaltet und an dem Körper angeordnet sein, dass im montierten Zustand der Zugentlastungsvorrichtung mit der Kabelanlage die Eingriffseinrichtung und die Endkappeneingriffseinrichtung zusammenwirken und eine Formschluss- und/oder Kraftschlussverbindung bereitstellen. Diese Formschluss- und/oder Kraftschlussverbindung verhindern insbesondere beschränken wenigstens teilweise eine Drehung der Zugentlastungsvorrichtung in Bezug auf die Endkappe um die Haupterstreckungsrichtung.

Der Haltefaden kann z.B. mittels eines Knotens und/oder mittels der Reibung zwischen dem Haltefaden und der Befestigungseinrichtung kraftschlüssig befestigbar sein.

Insbesondere ist der Haltefaden ein Seil, ein Draht und/oder eine Kordel. Der Haltefaden kann eine Verstärkungsfaser zur Verstärkung eines Bündeladerkabels von Glasfasern sein. Beispielsweise ist der Haltefaden ein Glas-, Kohle-, Aramid-, und/oder Kohle/Aramid-Band. Außerdem kann der Haltefaden ein Glas-, Kohle-, Aramid- und/oder Kohle/Aramid-Roving sein. Außerdem kann der Haltefaden eine Reißleine eines Bündeladerkabels von Glasfasern sein.

Wie oben beschrieben, ist die Endkappe an einem Glasfaser-Kabel montierbar und insbesondere mit dem Glasfaser-Verlegerohr lösbar fest verbindbar, z.B. einschraubbar. Nach und/oder vor der Montage der Endkappe an dem Glasfaser-Kabel, ist außerdem die erfindungsgemäße Zugentlastungsvorrichtung mit der Endkappe durch den Verbindungsbereich stoffschlüssig verbindbar.

Ist die Endkappe mit der Zugentlastungsvorrichtung durch die o.g. Stoffschlussverbindung und mit dem Glasfaser-Kabel durch die o.g. lösbare feste Verbindung verbunden, kann das Glasfaser-Bündeladerkabel wenigstens teilweise abgemantelt werden und die Reißleine und/oder die Verstärkungsfaser können z.B. mittels eines Knotens an der Befestigungseinrichtung kraftschlüssig befestig und somit wenigstens teilweise fest verbunden werden.

Dadurch wird eine Verbindung zwischen dem Glasfaser-Bündeladerkabel und dem Glasfaser-Verlegerohr bereitstellt, welche eine Verschiebung dem Glasfaser-Bündeladerkabel in Bezug auf das Glasfaser-Verlegerohr entlang der Haupterstreckungsrichtung wenigstens teilweise verhindert. Die erfindungsgemäße Zugentlastungsvorrichtung ermöglicht somit das Rutschen des Glasfaser-Bündeladerkabels durch das Glasfaser-Verlegerohr zuverlässig und effizient zu verhindern ohne Bedarf, Dichtungen zu verwenden.

Eine Ausführungsform der erfindungsgemäßen Zugentlastungsvorrichtung ist mit einer Kabelanlage verbindbar. Insbesondere weist die Kabelanlage ein im Wesentlichen zylinderförmiges Rohr und die Endkappe auf, welche mit dem Rohr verbunden und insbesondere auf eine Stirnkante des Rohrs aufgesetzt ist. Beispielsweise ist das Rohr ein Glasfaser-Verlegerohr, welches z.B. ein Glasfaser-Bündeladerkabel wenigstens teilweise umgibt.

Der Verbindungsbereich ist derart ausgestaltet, dass im montierten Zustand der Zugentlastungsvorrichtung mit der Kabelanlage, der Verbindungsbereich im Bereich eines entsprechenden Endkappenverbindungsbereichs der Endkappe angeordnet und mit dem Endkappenverbindungsbereich stoffschlüssig verbunden ist.

Im montierten Zustand der Zugentlastungsvorrichtung mit der Kabelanlage sind die Haupterstreckungsrichtung des Körpers und die Längsachse der Endkappe im Wesentlichen parallel zueinander angeordnet und ein Haltefaden ist an der Befestigungseinrichtung wenigstens kraftschlüssig befestigbar.

Nach einer Ausführungsform der Erfindung weist der Körper eine Oberfläche auf. Im montierten Zustand der Zugentlastungsvorrichtung mit der Endkappe ist die Oberfläche wenigstens teilweise in Kontakt mit der Endkappe angeordnet. Insbesondere ist die Oberfläche in Kontakt mit einer Kontaktfläche der Endkappe und die Form der Oberfläche kann mindestens teilweise die Form der Kontaktfläche entsprechen.

Die Verbindung zwischen der Zugentlastungsvorrichtung und der Endkappe wird somit wenigstens teilweise verstärkt, da die Zugentlastungsvorrichtung und die Endkappe mittels der Oberfläche und der Zugentlastungsvorrichtung einander unterstützen. Die Verbindung zwischen der Befestigungseinrichtung und dem Haltefaden wird auch wenigstens teilweise verstärkt, da die Zugentlastungsvorrichtung durch die Endkappe mittels der Kontaktfläche und der Oberfläche abgestützt wird.

Die Oberfläche kann im Wesentlichen ein Teil der Oberfläche eines Zylinders sein und insbesondere ist die Oberfläche ein Teil der Innenfläche eines ersten Hohlzylinders.

Nach der vorliegenden Erfindung ist ein Hohlzylinder insbesondere ein Zylinder, z.B. ein gerader Kreiszylinder, welcher eine Bohrung entlang seiner Achse besitzt. Die Achse des ersten Hohlzylinders kann insbesondere im Wesentlichen der Haupterstreckungsrichtung des Körpers entsprechen.

In einer weiteren Ausführungsform der Erfindung bildet der Körper einen Aufnahmebereich, welcher wenigstens teilweise durch die Oberfläche begrenzt ist. Im montierten Zustand der Zugentlastungsvorrichtung mit der Endkappe ist wenigstens ein Aufnahmeabschnitt der Endkappe in dem Aufnahmebereich aufgenommen. Beispielsweise entspricht die Form der Oberfläche wenigstens teilweise der Form des Aufnahmeabschnittes insbesondere der Kontaktfläche der Endkappe.

Nach dieser Ausführungsform der Erfindung werden die mittels der Kontaktfläche und der Oberfläche erreichte Unter- und/oder Abstützung erhöht und somit wird die Verbindung zwischen der Zugentlastungsvorrichtung und der Endkappe weiter verstärkt.

Im montierten Zustand der Zugentlastungsvorrichtung mit der Endkappe können insbesondere die Oberfläche und der Aufnahmeabschnitt der Endkappe eine Formschluss- und/oder Kraftschlussverbindung bereitstellen. Beispielsweise greifen der Aufnahmebereich und der Aufnahmeabschnitt mindestens teilweise formschlüssig ineinander.

In diesem Fall umfasst die Eingriffseinrichtung die Oberfläche und die Verschiebung-verhindernde Formschluss- und/oder Kraftschlussverbindung werden durch die Verbindung zwischen der Oberfläche und dem Aufnahmeabschnitt verstärkt. Die Eingriffseinrichtung kann entweder weitere Elemente aufweisen oder nur aus der Oberfläche bestehen.

Nach einer Ausführungsform der Erfindung ist der Körper ein Mantel, welcher ein Teil eines zweiten Hohlzylinders ist. In Querschnitt ist insbesondere der Mantel im Wesentlichen ein Teil eines Kreisrings. Beispielsweise ist der Mantel ein halber Hohlzylinder.

Nach dieser Ausführungsform der Zugentlastungsvorrichtung ist der Körper ein Mantel, dessen Form der Form der Endkappe wenigstens teilweise entspricht, da üblicherweise die Endkappe eine zylindrische Grundform aufweist. Im montierten Zustand der Zugentlastungsvorrichtung mit der Endkappe entsprechen die Abmessungen und die Form der Zugentlastungsvorrichtung-Endkappe Anlage im Wesentlichen den Abmessungen und der Form der Endkappe.

Dies *i.a.* ermöglicht die Montage die Zugentlastungsvorrichtung an der Endkappe zu vereinfachen, da diese Montage vor der Montage der Endkappe an dem Glasfasern-Verlegerohr erfolgen kann und somit nicht durch den Verteilerkasten räumlich eingeschränkt wird.

Die Verbindung zwischen der Zugentlastungsvorrichtung- Endkappe Anlage und dem Glasfaser-Verlegerohr erfolgt in dem Verteilerkasten ähnlich wie die Verbindung zwischen dem Endkappe und dem Glasfaser-Verlegerohr. Die Abmessungen des Verteilerkastens müssen nicht angepasst werden und/oder Spezialwerkzeugen werden nicht benötigt, da das Vorhandensein der mit der Endkappe verbundenen Zugentlastungsvorrichtung die Abmessungen und die Form der Endkappe nicht wesentlich beeinflusst.

In einer Ausführungsform der erfindungsgemäßen Zugentlastungsvorrichtungen ist die Befestigungseinrichtung ein Teil des Körpers.

Dies erhöht die Festigkeit der Zugentlastungsvorrichtung, da kein zu einem eventuellen Festigkeitsabfall führender Verbindungsbereich zwischen der Befestigungseinrichtung und dem Körper anwesend ist. Ist die Endkappe mit dem Glasfaser-Kabel und der Zugentlastungsvorrichtung montiert, wird somit die Verbindung zwischen dem Glasfaser-Verlegerohr und dem Glasfaser-Bündeladerkabel verstärkt.

Insbesondere sind die Befestigungseinrichtung und der Körper einstückig z.B. mittels eines Spritzgussverfahrens ausgebildet. Dabei kann eine kostengünstige Herstellung sich aus dem Spritzgussverfahren ergeben.

Gemäß der erfindungsgemäßen Zugentlastungsvorrichtungen weist die Befestigungseinrichtung wenigstens eine erste Nut auf, welche sich im Wesentlichen entlang einer zweiten Querrichtung erstreckt.

Nach der vorliegenden Erfindung liegt z.B. die zweite Querrichtung in einer Ebene, welche im Wesentlichen senkrecht zur Haupterstreckungsrichtung ist. Insbesondere erstreckt sich die erste Nut im Wesentlichen senkrecht zur Haupterstreckungsrichtung der Zugentlastungsvorrichtung.

Die zweite Querrichtung kann eine gerade Linie oder eine Bogenlinie aufweisen oder sein. Beispielsweise kann die erste Nut sich wenigstens teilweise entlang eines ersten Kreisbogens erstrecken, wobei der erste Kreisbogen in einer Ebene liegt, welche im Wesentlichen senkrecht zur Haupterstreckungsrichtung ist. Der erste Kreisbogen kann insbesondere im Wesentlichen auf der Haupterstreckungsrichtung zentriert sein. In diesem Fall ist die zweite Querrichtung der erste Kreisbogen oder die zweite Querrichtung umfasst den ersten Kreisbogen.

Im montierten Zustand der Zugentlastungsvorrichtung mit der Endkappe kann der Haltefaden in der ersten Nut einmal oder mehrmals eingeführt werden und dadurch wird der Haltefaden mit der Befestigungseinrichtung z.B. wenigstens durch die Reibung zwischen dem Haltefaden, der Befestigungseinrichtung und der Endkappe, kraftschlüssig befestigt.

Somit ermöglicht das Vorhandensein der ersten Nut, die Stärke der Befestigung des Haltefadens an der Befestigungseinrichtung auf relativ einfache Art durch die Anzahl des Einführens des Haltefadens in der ersten Nut wenigstens teilweise zu beeinflussen.

Die erste Nut wird insbesondere wenigstens teilweise durch eine erste begrenzende Fläche begrenzt. Die erste begrenzende Fläche kann wenigstens abschnittsweise eine strukturierte Fläche aufweisen, welche beispielsweise durch Rippen oder Wellen bereitstellt werden kann und vorzugsweise den Reibwiderstand an der ersten begrenzenden Fläche erhöht.

Nach einer weiteren Ausführungsform der Erfindung weist die Befestigungseinrichtung wenigstens eine zweite Nut auf, welche sich in Wesentlichen parallel zur Haupterstreckungsrichtung der Zugentlastungsvorrichtung erstreckt.

Im montierten Zustand der Zugentlastungsvorrichtung mit der Endkappe, kann der Haltefaden in der zweiten Nut einmal oder mehrmals eingeführt werden und dadurch wird der Haltefaden mit der Befestigungseinrichtung, z.B. wenigstens durch die Reibung zwischen dem Haltefaden, der Befestigungseinrichtung und der Endkappe, kraftschlüssig befestigt.

Nach dieser Ausführungsform der Zugentlastungsvorrichtung ist es möglich, die Stärke der Befestigung des Haltefadens an der Befestigungseinrichtung auf relativ einfache Art durch die Anzahl des Einführens des Haltefadens in der zweiten Nut wenigstens teilweise zu beeinflussen. Die zweite Nut wird insbesondere wenigstens teilweise durch eine zweite begrenzende Fläche begrenzt. Die zweite begrenzende Fläche kann wenigstens abschnittsweise eine strukturierte Fläche aufweisen, welche beispielsweise durch Rippen oder Wellen bereitgestellt werden kann und vorzugsweise den Reibwiderstand an der zweiten begrenzenden Fläche erhöht.

In einer weiteren, nicht beanspruchten Ausführungsform einer Zugentlastungsvorrichtungen weist die Befestigungseinrichtung ein T-förmiges oder ein L-förmiges Befestigungselement auf, welches einen ersten Stamm und einen ersten mit dem ersten Stamm verbundenen Arm aufweist.

Insbesondere kann wenigstens ein Teil des Haltefades um den ersten Stamm, den ersten Arm und/oder ggf. den zweiten Arm einmal oder mehrmals gewunden werden. Dadurch wird der Haltefaden mit dem T-förmigen und/oder dem L-förmigen Befestigungselement und somit mit der Befestigungseinrichtung kraftschlüssig befestigt.

Die Anordnung des ersten Stamms und des ersten Arms in Bezug aufeinander ermöglicht den Haltefaden einfach und effizient um dem Befestigungselement zu winden und/oder mittels eines Knotens, welcher eine relative hohe Knotenfestigkeit aufweist, z.B. mittels geeigneten Seemannsknoten, am Befestigungselement zu befestigen.

Der erste Stamm und der erste Arm können einen Winkel aufweisen, welcher nicht gestreckt und insbesondere stumpf ist. Beispielsweise sind der erste Stamm und der erste Arm zueinander im Wesentlichen senkrecht. Das T-förmige und/oder das L-förmige Befestigungselement können an dem Körper angeordnet sein.

Außerdem können das T-förmige und/oder das L-förmige Befestigungselement so angeordnet sein, dass der erste Stamm wenigstens teilweise im Wesentlichen parallel zur Haupterstreckungsrichtung des Körpers ist. Darüber hinaus können das T-förmige und/oder das L-förmige Befestigungselement so angeordnet sein, dass der erste Arm wenigstens teilweise im Wesentlichen parallel zur Haupterstreckungsrichtung des Körpers ist.

Das T-förmige Befestigungselement weist insbesondere einen zweiten Arm auf, welcher mit dem ersten Stamm verbunden ist und insbesondere im Wesentlichen gegenüberliegend zum ersten Arm ausgerichtet ist.

In diesem Fall kann wenigstens ein Teil der Haltefaden auch um den zweiten Arm einmal oder mehrmals gewunden werden, um die kraftschlüssige Befestigung des Haltefadens am T-förmigen Befestigungselement bereitzustellen.

Die Form des T-förmigen Befestigungselements, d.h. die Anordnung des ersten Stamms, des ersten Arms und des zweiten Arms in Bezug aufeinander, ermöglicht eine in Wesentlichen gleichmäßige Verteilung der Kräfte, welche den Haltefaden an dem Befestigungselement befestigen. Die Stabilität der Verbindung zwischen der Endkappe und der Zugentlastungsvorrichtung wird somit nicht durch die Befestigung des Haltefadens an der Befestigungseinrichtung negativ beeinflusst.

Der erste Stamm, der erste Arm und/oder der zweite Arm können wenigstens teilweise eben und/oder gebogen sein. Beispielsweise können der erste Stamm, der erste Arm und/oder der zweite Arm ein Teil eines dritten Hohlzylinders sein.

Die Achse des dritten Hohlzylinders entspricht insbesondere im Wesentlichen der Haupterstreckungsrichtung des Körpers. Außerdem kann der dritte Hohlzylinder dem ersten und oder dem zweiten Hohlzylinder im Wesentlichen entsprechen.

Insbesondere erstreckt der erste Stamm, der erste Arm und/oder der zweite Arm sich wenigsten teilweise entlang eines zweiten Kreisbogens, welcher beispielsweise im Wesentlichen auf der Haupterstreckungsrichtung zentriert ist. Darüber hinaus kann der zweite Kreisbogen in einer Ebene liegen, welche im Wesentlichen senkrecht zur Haupterstreckungsrichtung ist.

Insbesondere bilden der erste Arm und der erste Stamm mit einem ersten Bereich des Körpers eine erste Ausnehmung, welche einen variablen Querabschnitt aufweist. Außerdem bilden der zweiten Arm und der erste Stamm mit einem zweiten Bereich des Körpers eine zweite Ausnehmung, welche einen variablen Querabschnitt aufweist.

Der Querabschnitt der ersten und/oder der zweiten Ausnehmung liegt insbesondere in einer ersten bzw. zweiten Ebene, welche einen Winkel mit dem ersten bzw. zweiten Arm bildet. Beispielsweise ist die erste und/oder die zweite Ebene im Wesentlichen senkrecht zum ersten bzw. zweiten Arm.

Der variable Querabschnitt der ersten und/oder der zweiten Ausnehmung verhindert wenigstens teilweise ein unbeabsichtigtes Rutschen aus der ersten bzw. zweiten Ausnehmung, wodurch die Zuverlässigkeit der Befestigung des Haltefadens am Befestigungselement erhöht wird.

Ist insbesondere der erste Stamm wenigstens teilweise im Wesentlichen parallel zur Haupterstreckungsrichtung, kann beispielsweise die erste Ausnehmung die erste Nut aufweisen oder sein. Ist außerdem der erste Arm wenigstens teilweise im Wesentlichen parallel zur Haupterstreckungsrichtung, kann die erste Ausnehmung die zweite Nut aufweisen oder sein.

Insbesondere wird der Haltefaden durch das Winden des Haltefadens um den ersten Stamm, den ersten Arm und/oder ggf. den zweiten Arm in der ersten und/oder zweiten Ausnehmung einmal oder mehrmals eingeführt. Dadurch kann der Haltefaden mit der Befestigungseinrichtung auch durch die Reibung zwischen dem Haltefaden und der Befestigungseinrichtung kraftschlüssig befestigt werden. Durch die Anzahl des Einführens des Haltefadens in der ersten und/oder zweiten Ausnehmung kann die Stärke der Befestigung des Haltefadens an der Befestigungseinrichtung auf relativ einfache Art wenigstens teilweise beeinflusst werden.

Die erste Ausnehmung wird insbesondere wenigstens teilweise durch eine dritte begrenzende Fläche begrenzt. Die dritte begrenzende Fläche kann wenigstens abschnittsweise eine strukturierte Fläche aufweisen, welche beispielsweise durch Rippen oder Wellen bereitgestellt werden kann und vorzugsweise den Reibwiderstand an der dritten begrenzenden Fläche erhöht.

Beispielsweise kann der erste Arm eine erste Stirnkante aufweisen, welche eine erste Phase aufweist. Der zweite Arm des T-förmigen Befestigungselements kann auch eine zweite Stirnkante umfassen, welche eine zweite Phase aufweist. Die erste und/oder die zweite Phase können beispielsweise spitzförmig, keilförmig oder rundförmig sein. Diese Phasen vereinfachen das Einführen des Haltefadens in der ersten und/oder in der zweiten Ausnehmung und dadurch wird auch die Befestigung des Haltefadens an der Befestigungseinrichtung wenigstens teilweise vereinfacht.

Gemäß einer weiteren, nicht beanspruchten Ausführungsform die Befestigungseinrichtung ein C-förmiges, D-förmiges, E-förmiges, F-förmiges, G-förmiges, H-förmiges, O-förmiges, S-förmiges, U-förmiges, oder hakenförmiges Befestigungselement auf. Vorzugsweise weist die Befestigungseinrichtung ein hakenförmiges Befestigungselement auf.

Insbesondere kann wenigstens ein Teil des Haltefades um das o.g. Befestigungselement einmal oder mehrmals gewunden werden und dadurch wird der Haltefaden mit dem Befestigungselement und somit mit der Befestigungseinrichtung kraftschlüssig befestigt. Dies ist insbesondere eine kostengünstige Bauweise der Befestigungseinrichtung um die der Haltefaden einfach und effizient gewunden wird.

Vorzugsweise weist die Befestigungseinrichtung ein hakenförmiges Befestigungselement auf. Insbesondere weist das hakenförmige Befestigungselement einen zweiten Stamm und einen dritten mit dem zweiten Stamm verbundenen Arm auf. Außerdem kann das hakenförmige Befestigungselement auch einen Schenkel aufweisen, welcher mit dem dritten Arm verbunden ist und beispielsweise im Wesentlichen parallel zum zweiten Stamm ist.

Wenigstens ein Teil des Haltefadens kann um den zweiten Stamm, den dritten Arm und/oder ggf. den Schenkel einmal oder mehrmals gewunden werden. Dadurch wird der Haltefaden mit dem hakenförmigen Befestigungselement und somit mit der Befestigungseinrichtung kraftschlüssig befestigt.

Die Anordnung des zweiten Stamms, des dritten Arms und ggf. des Schenkels in Bezug aufeinander ermöglicht, den Haltefaden einfach und effizient um dem Befestigungselement zu winden und/oder mittels eines Knotens, welcher eine relative hohe Knotenfestigkeit aufweist, am Befestigungselement zu befestigen.

Der zweite Stamm und der dritte Arm können einen Winkel aufweisen, welcher nicht gestreckt und insbesondere stumpf ist. Beispielsweise sind der zweite Stamm und der dritte Arm zueinander im Wesentlichen senkrecht.

Das hakenförmige Befestigungselement kann an dem Körper angeordnet sein. Außerdem kann das hakenförmige Befestigungselement so angeordnet sein, dass der zweiten Stamm wenigstens teilweise im Wesentlichen parallel zur Haupterstreckungsrichtung des Körpers ist. Darüber hinaus kann das hakenförmige Befestigungselement so angeordnet sein, dass der dritte Arm wenigstens teilweise im Wesentlichen parallel zur Haupterstreckungsrichtung des Körpers ist.

Der zweite Stamm, der dritte Arm und/oder ggf. der Schenkel können wenigstens teilweise eben und/oder gebogen sein. Beispielsweise können der zweite Stamm, der dritte Arm und/oder ggf. der Schenkel ein Teil eines vierten Hohlzylinders sein. Die Achse des vierten Hohlzylinders entspricht insbesondere im Wesentlichen der Haupterstreckungsrichtung des Körpers. Außerdem kann der vierte Hohlzylinder dem ersten, dem zweiten und/oder dem dritten Hohlzylinder im Wesentlichen entsprechen.

Insbesondere erstreckt der zweite Stamm, der dritte Arm und/oder ggf. der Schenkel sich wenigsten teilweise entlang eines dritten Kreisbogens, welcher beispielsweise im Wesentlichen auf der Haupterstreckungsrichtung zentriert ist. Darüber hinaus kann der dritte Kreisbogen in einer Ebene liegen, welche im Wesentlichen senkrecht zur Haupterstreckungsrichtung ist. Insbesondere bilden der zweite Stamm, der dritte Arm und ggf. der Schenkel eine dritte Ausnehmung, welche einen variablen Querabschnitt aufweisen kann. Der Querabschnitt der dritten Ausnehmung liegt insbesondere in einer dritten Ebene, welche einen Winkel mit dem dritten Arm bildet. Beispielsweise ist die dritte Ebene im Wesentlichen senkrecht zum ersten bzw. zweiten Arm.

Die erfindungsgemäßen Zugentlastungsvorrichtungen können aus Metall oder Kunststoff gefertigt sein. Bevorzugt und beispielsweise sind die erfindungsgemäßen Zugentlastungsvorrichtungen aus Polypropylen, Polyvinylchlorid, Stahllegierung oder Aluminium, und insbesondere aus hocheloxiertem Aluminium gefertigt.

Die Endkappe weist einen Endkappenverbindungsbereich auf und erstreckt sich entlang einer Längsachse. Die Endkappe ist über den Endkappenverbindungsbereich mit der Zugentlastungsvorrichtung verbunden oder einstückig ausgebildet. Die Haupterstreckungsrichtung des Körpers und die Längsachse der Endkappe sind im Wesentlichen parallel zueinander angeordnet und ein Haltefaden ist an der Befestigungseinrichtung wenigstens kraftschlüssig befestigbar.

Der Haltefaden kann z.B. mittels eines Knotens und/oder mittels der Reibung zwischen dem Haltefaden und der Befestigungseinrichtung kraftschlüssig befestigt sein. Insbesondere ist der Haltefaden ein Seil, ein Draht und/oder oder eine Kordel. Der Haltefaden kann eine Verstärkungsfaser zur Verstärkung eines Bündeladerkabels von Glasfasern sein. Beispielsweise ist der Haltefaden ein Glas-, Kohle-, Aramid-, und/oder Kohle/Aramid-Band. Außerdem kann der Haltefaden ein Glas-, Kohle-, Aramid- und/oder Kohle/Aramid-Roving sein. Außerdem kann der Haltefaden eine Reißleine eines Bündeladerkabels von Glasfasern sein.

Im montierten Zustand der ersten Endkappe mit einem im Wesentlichen zylinderförmigen Rohr ist insbesondere der Haltefaden an der Befestigungseinrichtung wenigstens kraftschlüssig befestigbar.

Die erfindungsgemäße Vorrichtung umfasst die erfindungsgemäße Zugentlastungsvorrichtung und somit weist die o.g. Vorteile der erfindungsgemäßen Zugentlastungsvorrichtung auf.

In einer Ausführungsform der erfindungsgemäßen Vorrichtung ist der Endkappenverbindungsbereich der Endkappe in der Form einer Endkappeneingriffseinrichtung. Die Eingriffseinrichtung und die Endkappeneingriffseinrichtung wirken zusammen und stellen eine Formschluss- und/oder Kraftschlussverbindung bereit, welche eine Verschiebung der Zugentlastungsvorrichtung in Bezug auf die Endkappe wenigstens entlang der Haupterstreckungsrichtung wenigstens teilweise verhindern insbesondere beschränken.

Beispielsweise sind die o.g. Formschluss- und/oder die o.g. Kraftschlussverbindung eine Verbindungsart, bei welcher die beiden im Wesentlichen zueinander koaxial anordbaren Bauteile (Zugentlastungsvorrichtung und Endkappe) so miteinander verbindbar sind, dass eine unbeabsichtigte Trennung der beiden möglichst vermieden wird.

In einer weiteren Ausführungsform der erfindungsgemäßen Vorrichtung weist die Endkappeneingriffseinrichtung wenigstens ein Endkappeneingriffselement, wie z.B. ein Rastelement, eine Nut, eine Durchführung und/oder einen Rücksprung, auf. Insbesondere weist die Endkappeneingriffseinrichtung wenigstens eine Rille, eine Rundrille oder einen Vorsprung auf.

Das Endkappeneingriffselement, insbesondere das Rastelement, die Nut, die Durchführung der Rücksprung, die Rille, die Rundrille und/oder der Vorsprung erstrecken sich wenigstens im Wesentlichen parallel zur Längsachse der Endkappe.

Ist beispielsweise das Eingriffselement ein Vorsprung, eine Rille und/oder eine Rundrille, ist das Endkappeneingriffselement ein entsprechender Rücksprung, eine entsprechende Nut und/oder eine entsprechende Durchführung und die Form des Endkappeneingriffselements entspricht z.B. der Form des Eingriffselements. In diesem Fall greift das Eingriffselement formschlüssig in dem Endkappeneingriffselement.

Ist beispielsweise das Eingriffselement ein Rücksprung, eine Nut und/oder eine Durchführung, kann das Endkappeneingriffselement ein entsprechender Vorsprung, eine entsprechende Rille und/oder eine entsprechende Rundrille sein. Insbesondere entspricht die Form des Endkappeneingriffselements der Form des Eingriffselements. In diesem Fall greift das Endkappeneingriffselement formschlüssig in dem Eingriffselement.

Insbesondere weist die Endkappeneingriffseinrichtung eine Vielzahl von Endkappeneingriffselementen auf, welche z.B. entlang eines zweiten in Bezug auf die Längsachse axialen Abschnittes oder entlang einer Vielzahl von in Bezug auf die Längsachse axialen Abschnitten der Endkappe angeordnet sind. Das Endkappeneingriffselement ist z.B. ein Rastelement, eine Nut, einen Rücksprung, eine Rille, eine Rundrille und/oder einen Vorsprung.

Die Endkappeeingriffseinrichtung kann auch eine Nut und/oder einen Vorsprung umfassen, welche sich entlang des ersten in Bezug auf die Längsachse axialen Abschnittes erstrecken.

Nach einer weiteren Ausführungsform der erfindungsgemäßen Vorrichtung ist der Verbindungsbereich im Bereich des Endkappenverbindungsbereichs angeordnet und mit dem Endkappenverbindungsbereich stoffschlüssig verbunden.

Die erfindungsgemäße Vorrichtung kann eine Kabelanlage aufweisen, welche ein im Wesentlichen zylinderförmiges Rohr und die Endkappe umfasst. Die Endkappe ist mit dem Rohr verbunden und insbesondere auf eine Stirnkante des Rohrs aufgesetzt. Beispielsweise ist die Kabelanlage eine Glasfaser- Kabelanlage und somit das Rohr ist ein Glasfaser-Verlegerohr, welche z.B. ein Glasfaser-Bündeladerkabel seitlich umgibt.

Insbesondere kann die Kabelanlage den Haltefaden aufweisen. Ist beispielsweise die Kabelanlage eine Glasfaser-Kabelanlage, kann der Haltefaden eine Verstärkungsfaser zur Verstärkung des Glasfaser-Bündeladerkabels sein. Beispielsweise ist der Haltefaden ein Glas-, Kohle-, Aramid, und/oder Kohle/Aramid-Band. Außerdem kann der Haltefaden ein Glas-, Kohle-, Aramid, und/oder Kohle/Aramid-Roving sein. Darüber hinaus kann der Haltefaden eine Reißleine des Glasfaser-Bündeladerkabels sein.

In einer weiteren Ausführungsform der erfindungsgemäßen Vorrichtung weist die Endkappe eine zylindrische Grundform auf. Die Endkappe umfasst einen Endkappenmantel und entlang ihrer Längsachse ein innenliegendes, zylindrisches Aufnahmeteil mit einer endseitigen Stirnfläche und einen Bedienkopf. Das Aufnahmeteil weist mindestens eine erste seitliche Schlitzung und auf der Innenseite wenigstens ein Element einer Formschlussverbindung zur Wechselwirkung mit dem abzudeckenden Rohr auf. Die erste seitliche Schlitzung erstreckt sich nur teilweise über die Höhe des Endkappenmantels und weist am Endpunkt innerhalb der Kontur des Endkappenmantels eine Entspannungsbohrung auf.Das Aufnahmeteil kann auch mehrere Schlitzungen z.B. eine zweite, eine dritte und eine vierte seitliche Schlitzung aufweisen.

Insbesondere weist die Bedienkopf eine konzentrische Öffnung zur Durchführung eines Glasfaserkabels insbesondere eines Glasfaser-Bündeladerkabels, wobei die konzentrische Öffnung sich im Wesentlichen entlang der Längsachse erstreckt und kann eine zylindrische Grundform aufweisen. Außerdem kann die Endkappe eine fünfte seitliche Schlitzung aufweisen, welche sich vollständig über die Höhe des Endkappenmantels erstreckt.

Beispielsweise ist das Element der Formschlussverbindung zur Wechselwirkung mit dem abzudeckenden Rohr ein Innengewinde, z.B. ein selbstschneidendes Gewinde, eine Vielzahl von Innengewinden, ein Grippelement und/oder eine Vielzahl von Grippelementen.

Die durch das Element erreichte Formschlussverbindung zwischen der Endkappe und dem abzudeckenden Rohr erfolgt beispielsweise mittels wenigstens einer Grippverbindung, Rastverbindung, Stiftverbindung, Keilverbindung, Zahnverbindung, Kombinationen hiervon oder dergleichen, wobei es ausreicht, dass die einzelnen Elemente der Verbindung nur an einer Oberfläche (z.B. der Innenseite des Aufnahmeteils) angeordnet sind. Ferner sind die einzelnen Elemente derart ausgeführt dass diese wenigstens teilweise in die Oberfläche des angrenzenden Bauteils (Rohr) eingreifen. Ein mögliches Beispiel hierfür kann ein selbstschneidendes Gewinde im innenliegenden Aufnahmeteil sein, welches in die Oberfläche des Rohrs eingreift, hier einen Gewindegang einschneidet und so ein unbeabsichtigtes Lösen verhindert. Trotzdem ist es dann möglich, die Endkappe durch Drehung über den Gewindegang bei Bedarf von dem Rohr zu lösen.

Die Endkappeneingriffseinrichtung kann die Entspannungsbohrung oder eine Vielzahl von Entspannungsbohrungen aufweisen. In diesem Fall kann die Eingriffseinrichtung der Zugentlastungsvorrichtung eine entsprechende Rundrille aufweisen, welche formschlüssig in der Entspannungsbohrung greift, um die Verschiebung-verhindernde Formschluss- und/oder Kraftschlussverbindung bereitzustellen.

Die Endkappeneingriffseinrichtung kann auch eine Vielzahl von Entspannungsbohrungen aufweisen. In diesem Fall kann die Eingriffseinrichtung der Zugentlastungsvorrichtung eine Vielzahl von entsprechenden Rundrillen aufweisen, wobei jede Rundrille formschlüssig in einer der Vielzahl von Entspannungsbohrungen greift, um die Verschiebung-verhindernde Formschluss- und/oder Kraftschlussverbindung bereitzustellen.

Nach einer weiteren Ausführungsform der erfindungsgemäßen Vorrichtung umfasst die Endkappe ein Dichtelement, welche an der innenliegenden Stirnfläche des zylindrischen Aufnahmeteils angeordnet ist.

Insbesondere ist das Dichtelement in Form einer Scheibe oder eines Rings und/oder weist eine Öffnung zur Durchführung eines Glasfaserkabels insbesondere eines Glasfaser-Bündeladerkabels auf. Das Dichtelement kann wenigstens Teile der fünften Schlitzung innerhalb der Kontur des Endkapppenmantels verschließen und insbesondere an die Innenkontur des Endkappenmantels angepasst ist.

Die Erfindung betrifft außerdem die Verwendung der erfindungsgemäßen Zugentlastungsvorrichtungen für ein Glasfasern-Verlegerohr, insbesondere zur Zugentlastung von Lichtwellenleiterkabeln. Nachfolgend werden verschieden Ausführungsformen der Erfindung erläutert, wobei diese nur Beispielshaft der Erfindung wiedergeben und keine Einschränkung der Erfindungsidee im Bezug auf Abwandlungen darstellen. Dabei zeigt:
Fig. 1a eine schematische Darstellung einer ersten Ausführungsform der erfindungsgemäßen Zugentlastungsvorrichtung entlang der Linie 440-440 von Fig. 1b;
Fig. 1b eine schematische Darstellung der ersten Ausführungsform der erfindungsgemäßen Zugentlastungsvorrichtung entlang der Linie 420-420 von Fig. 1a;
Fig. 1c eine schematische Darstellung der ersten Ausführungsform der erfindungsgemäßen Zugentlastungsvorrichtung entlang der Linie 410-410 von Fig. **1a****;**
**Fig. 2a** eine schematische Darstellung einer zweiten Ausführungsform der erfindungsgemäßen Zugentlastungsvorrichtung entlang der **Linie 440-440** von **Fig. 2b****;**
**Fig. 2b** eine schematische Darstellung der zweiten Ausführungsform der erfindungsgemäßen Zugentlastungsvorrichtung entlang der **Linie** 420-420 von **Fig. 2a****;**
**Fig. 3a** eine schematische Darstellung einer dritten Ausführungsform der erfindungsgemäßen Zugentlastungsvorrichtung entlang der Linie 440-440 von **Fig. 3b****;**
**Fig. 3b** eine schematische Darstellung der dritten Ausführungsform der erfindungsgemäßen Zugentlastungsvorrichtung entlang der Linie 420-420 von **Fig. 3a****;**
**Fig. 3c** eine schematische Darstellung der dritten Ausführungsform der erfindungsgemäßen Zugentlastungsvorrichtung entlang der Linie 410-410 von **Fig. 3a****;**
**Fig. 4a** eine schematische Darstellung einer vierten Ausführungsform der erfindungsgemäßen Zugentlastungsvorrichtung entlang der Linie **440-440** von Fig. 4b;
Fig. 4b eine schematische Darstellung der vierten Ausführungsform der erfindungsgemäßen Zugentlastungsvorrichtung entlang der Linie 420-420 von Fig. 4a;
Fig. 5a eine schematische Darstellung einer fünften, nicht beanspruchten Ausführungsform einer Zugentlastungsvorrichtung entlang der Linie 440-440 von **Fig. 5b****;**
**Fig. 5b** eine schematische Darstellung der fünften, nicht beanspruchten Ausführungsform einer Zugentlastungsvorrichtung entlang der Linie 420-420 von **Fig. 5a****;**
**Fig. 5c** eine schematische Darstellung der fünften, nicht beanspruchten Ausführungsform einer Zugentlastungsvorrichtung entlang der Linie 410-410 von **Fig. 5a****;**
**Fig. 6a** eine schematische Darstellung einer sechsten Ausführungsform der erfindungsgemäßen Zugentlastungsvorrichtung entlang der **Linie 440-440** von **Fig. 6b****;**
**Fig. 6b** eine schematische Darstellung der sechsten Ausführungsform der erfindungsgemäßen Zugentlastungsvorrichtung entlang der **Linie** 420-420 von **Fig. 6a****;**
**Fig. 7a** eine schematische Darstellung einer siebten, nicht beanspruchten Ausführungsform einer Zugentlastungsvorrichtung entlang der Linie 440-440 von **Fig. 7b****;**
**Fig. 7b** eine schematische Darstellung der siebten, nicht beanspruchten Ausführungsform einer Zugentlastungsvorrichtung entlang der Linie 420-420 von **Fig. 7a****;**
**Fig. 7c** eine schematische Darstellung der siebten, nicht beanspruchten Ausführungsform einer Zugentlastungsvorrichtung entlang der Linie 410-410 von **Fig. 7a****;**
**Fig. 8a** eine schematische Darstellung einer achten, nicht beanspruchten Ausführungsform einer Zugentlastungsvorrichtung entlang der Linie **440-440** von Fig. 8b;
Fig. 8b eine schematische Darstellung der achten, nicht beanspruchten Ausführungsform einer Zugentlastungsvorrichtung;
**Fig. 9a** eine schematische Darstellung der Endkappe einer ersten Ausführungsform der erfindungsgemäßen Vorrichtung;
Fig. 9b eine schematische Darstellung des Längsschnitts der Endkappe der ersten Ausführungsform der erfindungsgemäßen Vorrichtung;
Fig. 9c eine schematische Darstellung der ersten Ausführungsform der erfindungsgemäßen Vorrichtung; und
Fig. 9d eine schematische Darstellung der ersten Ausführungsform der erfindungsgemäßen Vorrichtung im montierten Zustand mit einem Glasfaser-Kabel.

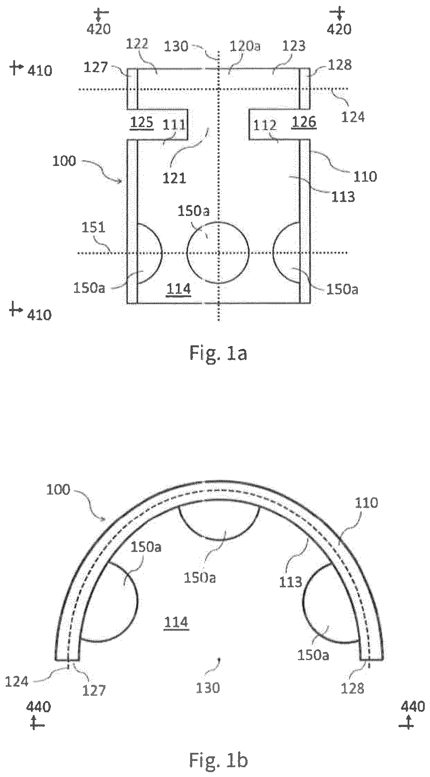

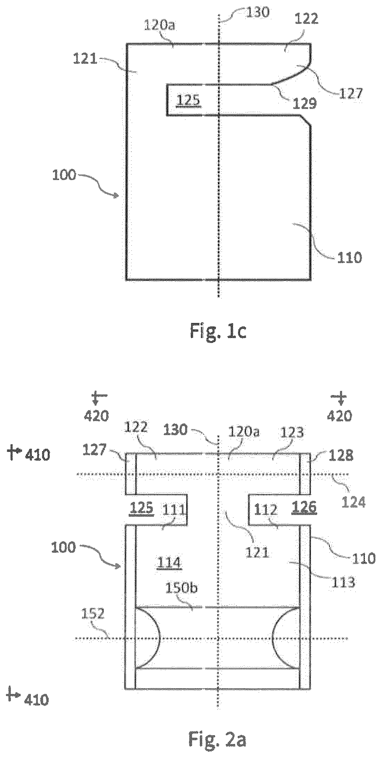

**Fig. 1a, Fig. 1b** und **Fig.1c** zeigen eine schematische Darstellung einer ersten Ausführungsform der erfindungsgemäßen Zugentlastungsvorrichtung 100. Die Zugentlastungsvorrichtung umfasst den Körper 110, welcher sich entlang der Haupterstreckungsrichtung 130 erstreckt, die Befestigungseinrichtung und die Eingriffseinrichtung.

Der Körper 110 ist ein Mantel und ein Teil des zweiten Hohlzylinders, wobei die Achse des zweiten Hohlzylinders der Haupterstreckungsrichtung 130 des Körpers entspricht. Der Körper 110 weist eine Oberfläche 113 auf, welche ein Teil der Innenfläche des zweiten Hohlzylinders ist. Nach der ersten Ausführungsform der erfindungsgemäßen Zugentlastungsvorrichtung 100 entspricht somit der zweite Hohlzylinder dem ersten Hohlzylinder. Der Körper 110 ist insbesondere ein halber Hohlzylinder und bildet einen Aufnahmebereich 114, welcher teilweise durch die Oberfläche 113 begrenzt ist.

Im montierten Zustand der Zugentlastungsvorrichtung 100 mit der Endkappe ist wenigstens einen Aufnahmeabschnitt der Endkappe in dem Aufnahmebereich 114 aufgenommen und die Form der Oberfläche 113 entspricht wenigstens teilweise der Form des Aufnahmeabschnittes der Endkappe.

Die Eingriffseinrichtung weist drei Rundrillen 150a auf, wobei die Stückzahl der Rundrillen 150a aber auch variieren kann. Die Rundrillen 150a sind an der Oberfläche 113 des Körpers 110 entlang des ersten in Bezug auf die Haupterstreckungsrichtung 130 axialen Abschnittes 151 der Zugentlastungsvorrichtung 100 angeordnet. Die Rundrillen 150a können Teilen des Körpers 110 sein und insbesondere sind die Rundrillen 150a und der Körper 110 einstückig z.B. mittels eines Spritzgussverfahrens ausgebildet.

Die Rundrillen 150a sind derart ausgestaltet und an dem Körper 110 angeordnet, dass im montierten Zustand der Zugentlastungsvorrichtung 100 mit der Endkappe, die Rundrillen 150a und entsprechenden Endkappeneingriffselemente (beispielweise drei Durchführungen) zusammenwirken. Die Rundrillen 150a und die o.g. Endkappeneingriffselemente stellen eine Formschluss- und/oder Kraftschlussverbindung bereit, welche eine Verschiebung der Zugentlastungsvorrichtung 100 in Bezug auf die Endkappe entlang der Haupterstreckungsrichtung 130 und eine Drehung der Zugentlastungsvorrichtung 100 in Bezug auf die Endkappe um die Haupterstreckungsrichtung 130 wenigstens teilweise verhindern insbesondere beschränken.

Die Eingriffseinrichtung weist drei Vorsprünge (nicht dargestellt) auf, wobei die Stückzahl der Vorsprünge aber auch variieren kann. Die Vorsprünge sind an der Oberfläche 113 des Körpers 110 angeordnet und erstrecken sich im Wesentlichen parallel zur Haupterstreckungsrichtung 130. Die Vorsprünge können Teile des Körpers 110 sein und insbesondere sind die Vorsprünge Rundrillen 150a und der Körper 110 einstückig z.B. mittels eines Spritzgussverfahrens ausgebildet. Die Rundrillen 150a sind derart ausgestaltet und an dem Körper 110 angeordnet, dass im montierten Zustand der Zugentlastungsvorrichtung 100 mit der Endkappe, die Rundrillen 150a und den entsprechenden Endkappeneingriffselementen (beispielweise drei Rücksprünge) zusammenwirken, um die o.g. Verschiebung- und Drehung- verhindernde Formschluss- und/oder Kraftschlussverbindung zu verstärken.

Im montierten Zustand der Zugentlastungsvorrichtung mit der Endkappe können die Oberfläche 113 und der Aufnahmeabschnitt der Endkappe eine Formschluss- und/oder Kraftschlussverbindung bereitstellen. Beispielsweise greifen der Aufnahmebereich 114 und der Aufnahmeabschnitt mindestens teilweise formschlüssig ineinander. In diesem Fall weist die Eingriffseinrichtung auch die Oberfläche 113 auf.

Die Befestigungseinrichtung weist ein T-förmiges Befestigungselement 120a auf, welches am Körper 110 angeordnet ist und welches den ersten Stamm 121, den ersten Arm 122 und den zweiten Arm 123 aufweist. Der erste Arm 122 und der zweite Arm 123 sind mit dem ersten Stamm 121 verbunden und im Wesentlichen gegenüberliegend zueinander ausgerichtet. Außerdem sind diese zwei Arme 122, 123 im Wesentlichen senkrecht zum ersten Stamm 121. Der erste Arm 122 und der zweite Arm 123 weisen eine erste Stirnkante 127 bzw. zweite Stirnkante 128 auf, welche eine erste Phase 129 bzw. eine zweite Phase umfassen.

Das T-förmige Befestigungselement 120a ist so angeordnet, dass der erste Stamm 121 im Wesentlichen parallel zur Haupterstreckungsrichtung 130 ist. Der ersten Arm 122 und der zweiten Arm 123 sind gebogen und erstrecken sich entlang des zweiten Kreisbogens 124, welcher im Wesentlichen auf der Haupterstreckungsrichtung 130 zentriert ist.

Der erste Arm 122 und der erste Stamm 121 bilden mit dem ersten Bereich 111 des Körpers 110 die erste Ausnehmung 125. Außerdem bilden der zweiten Arm 123 und der erste Stamm 121 mit dem zweiten Bereich 112 des Körpers 110 die zweite Ausnehmung 126.

Im montierten Zustand der Zugentlastungsvorrichtung 100 mit der Endkappe, sind die Haupterstreckungsrichtung 130 des Körpers 110 und die Längsachse der Endkappe im Wesentlichen parallel zueinander angeordnet und ein Haltefaden ist an der Befestigungseinrichtung, d.h. am T-förmigen Befestigungselement 120a wenigstens kraftschlüssig befestigbar.

Insbesondere kann wenigstens ein Teil des Haltefadens um den ersten Stamm 121, den ersten Arm 122 und/oder den zweiten Arm 123 einmal oder mehrmals gewunden werden. Außerdem wird der Haltefaden in der ersten Ausnehmung 125 und/oder zweiten Ausnehmung 126 einmal oder mehrmals eingeführt. Dadurch wird der Haltefaden mit dem T-förmigen Befestigungselement 120a wenigstens durch die Reibung zwischen dem Haltefaden und dem T-förmigen Befestigungselement 120a kraftschlüssig befestigt.

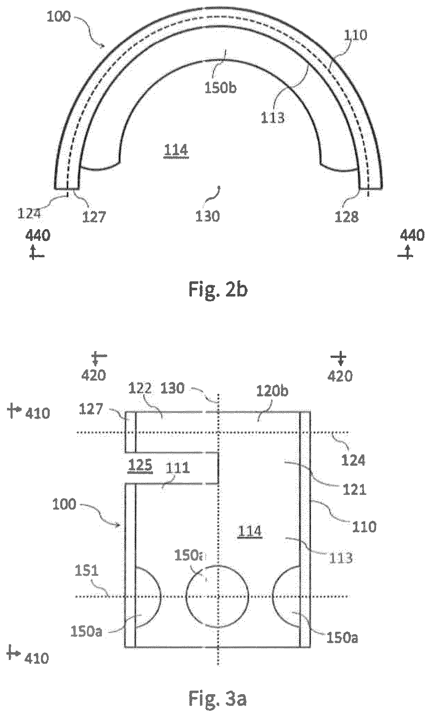

**Fig. 2a** und **Fig. 2b** zeigen eine schematische Darstellung einer zweiten Ausführungsform der erfindungsgemäßen Zugentlastungsvorrichtung 100. Der Körper 110 und die Befestigungseinrichtung der zweiten Ausführungsform sind im Wesentlichen identisch mit dem Körper 110 bzw. mit der Befestigungseinrichtung der oben beschriebenen ersten Ausführungsform der erfindungsgemäßen Zugentlastungsvorrichtung 100, wie in **Fig. 1a, Fig. 1b** und **Fig. 1c** dargestellt.

Die Eingriffseinrichtung weist ein Vorsprung 150b in der Form einer Feder auf, welche sich entlang des zweiten in Bezug auf die Haupterstreckungsrichtung 130 der Zugentlastungsvorrichtung 110 axialen Abschnittes 152 erstreckt und ist an der Oberfläche 113 des Körpers 110 angeordnet. Der Vorsprung 150b kann ein Teil des Körpers 110 sein und insbesondere sind der Vorsprung 150b und der Körper 110 einstückig z.B. mittels eines Spritzgussverfahrens ausgebildet.

Der Vorsprung 150b ist derart ausgestaltet und an dem Körper 110 angeordnet, dass im montierten Zustand der Zugentlastungsvorrichtung 100 mit der Endkappe, der Vorsprung 150b und die entsprechende Endkappeneingriffseinrichtung (beispielweise eine Nut) zusammenwirken. Der Vorsprung 150b und die Endkappeneingriffseinrichtung stellen eine Formschluss- und/oder Kraftschlussverbindung bereit, welche eine Verschiebung der Zugentlastungsvorrichtung 100 in Bezug auf die Endkappe entlang der Haupterstreckungsrichtung 130 wenigstens teilweise verhindert bzw. beschränkt.

Im montierten Zustand der Zugentlastungsvorrichtung 100 mit der Endkappe können die Oberfläche 113 und der Aufnahmeabschnitt der Endkappe eine Formschluss- und/oder Kraftschlussverbindung bereitstellen. Beispielsweise greifen der Aufnahmebereich 114 und der Aufnahmeabschnitt mindestens teilweise formschlüssig in einander. In diesem Fall weist die Eingriffseinrichtung auch die Oberfläche 113 auf.

Die Darstellung der zweiten Ausführungsform der erfindungsgemäßen Zugentlastungsvorrichtung 100 entlang der Linie 410-410 von **Fig. 2a** ist im Wesentlichen identisch mit der Darstellung der ersten Ausführungsform der erfindungsgemäßen Zugentlastungsvorrichtung 100 entlang der Linie 410-410 von **Fig. 1a****.**

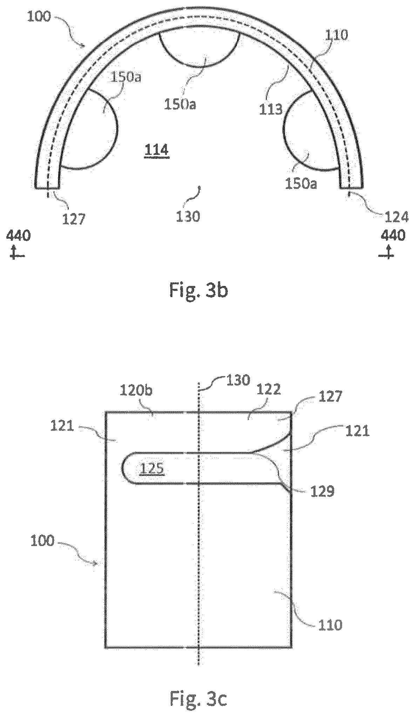

**Fig. 3a****,** **Fig. 3b** und **Fig. 3c** zeigen eine schematische Darstellung einer dritten Ausführungsform der erfindungsgemäßen Zugentlastungsvorrichtung 100. Der Körper 110 und die Eingriffseinrichtung der zweiten Ausführungsform sind im Wesentlichen identisch mit dem Körper 110 bzw. mit der Eingriffseinrichtung der oben beschriebenen ersten Ausführungsform der erfindungsgemäßen Zugentlastungsvorrichtung 100, wie in **Fig. 1a, Fig. 1b** und **Fig. 1c** dargestellt.

Die Befestigungseinrichtung weist ein L-förmiges Befestigungselement 120b auf, welches am Körper 110 angeordnet ist und welches den ersten Stamm 121 und den mit dem ersten Stamm 121 verbundenen ersten Arm 122 aufweist, welche im Wesentlichen senkrecht zum ersten Stamm 121 ist. Der erste Arm 122 weist die erste Stirnkante 127 auf, welche die erste Phase 129 umfasst.

Das L-förmige Befestigungselement 120b ist so angeordnet, dass der erste Stamm 121 im Wesentlichen parallel zur Haupterstreckungsrichtung 130 ist. Der erste Stamm 121 und der ersten Arm 122 ist gebogen und erstrecken sich entlang des zweiten Kreisbogens 124, welcher im Wesentlichen auf der Haupterstreckungsrichtung 130 zentriert ist. Das L-förmige Befestigungselement 120b ist ein Teil des ersten Hohlzylinders. In diesem Fall entspricht somit der dritte Hohlzylinder dem ersten und dem zweiten Hohlzylinder. Der erste Arm 122 und der erste Stamm 121 bilden mit dem ersten Bereich 111 des Körpers 110 die erste Ausnehmung 125.

Im montierten Zustand der Zugentlastungsvorrichtung 100 mit der Endkappe, sind die Haupterstreckungsrichtung 130 des Körpers 110 und die Längsachse der Endkappe im Wesentlichen parallel zueinander angeordnet und ein Haltefaden ist an der Befestigungseinrichtung, d.h. am L-förmigen Befestigungselement 120b wenigstens kraftschlüssig befestigbar.

Insbesondere kann wenigstens ein Teil des Haltefades um den ersten Stamm 121 und/oder den ersten Arm 122 einmal oder mehrmals gewunden werden. Außerdem wird der Haltefaden in der ersten 125 Ausnehmung einmal oder mehrmals eingeführt. Dadurch wird der Haltefaden mit dem L-förmigen Befestigungselement 120b wenigstens durch die Reibung zwischen dem Haltefaden und dem L-förmigen Befestigungselement 120b kraftschlüssig befestigt.

Im montierten Zustand der Zugentlastungsvorrichtung 100 mit der Endkappe können die Oberfläche 113 und der Aufnahmeabschnitt der Endkappe eine Formschluss- und/oder Kraftschlussverbindung bereitstellen. Beispielsweise greifen der Aufnahmebereich 114 und der Aufnahmeabschnitt mindestens teilweise formschlüssig ineinander. In diesem Fall weist die Eingriffseinrichtung auch die Oberfläche 113 auf.

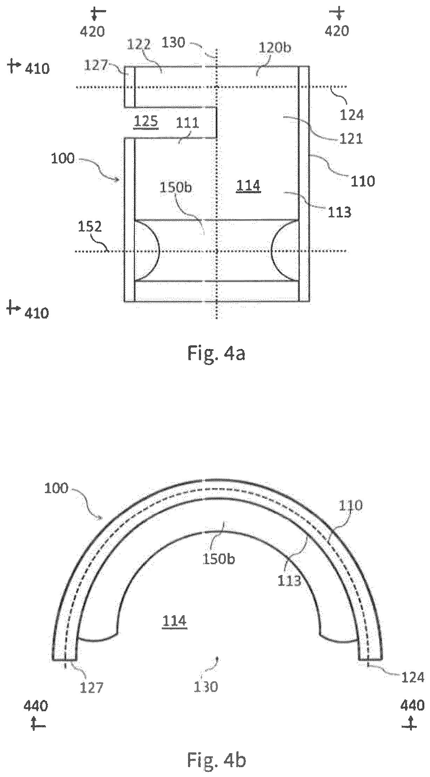

**Fig. 4a** und Fig. **4b** zeigen eine schematische Darstellung einer vierten Ausführungsform der erfindungsgemäßen Zugentlastungsvorrichtung 100. Der Körper 110 und die Befestigungseinrichtung der vierten Ausführungsform sind im Wesentlichen identisch mit dem Körper 110 bzw. mit der Befestigungseinrichtung der oben beschriebenen dritten Ausführungsform der erfindungsgemäßen Zugentlastungsvorrichtung 100, wie in **Fig. 3a****,** **Fig. 3b** und **Fig. 3c** dargestellt.

Außerdem ist die Eingriffseinrichtung der vierten Ausführungsform im Wesentlichen identisch mit der Eingriffseinrichtung der oben beschriebenen zweiten Ausführungsform der erfindungsgemäßen Zugentlastungsvorrichtung 100, wie in **Fig. 2a** und **Fig. 2b** dargestellt.

Die Darstellung der vierten Ausführungsform der erfindungsgemäßen Zugentlastungsvorrichtung 100 entlang der Linie 410-410 von **Fig. 4a** ist im Wesentlichen identisch mit der Darstellung der ersten Ausführungsform der erfindungsgemäßen Zugentlastungsvorrichtung 100 entlang der Linie 410-410 von **Fig.** 3a.

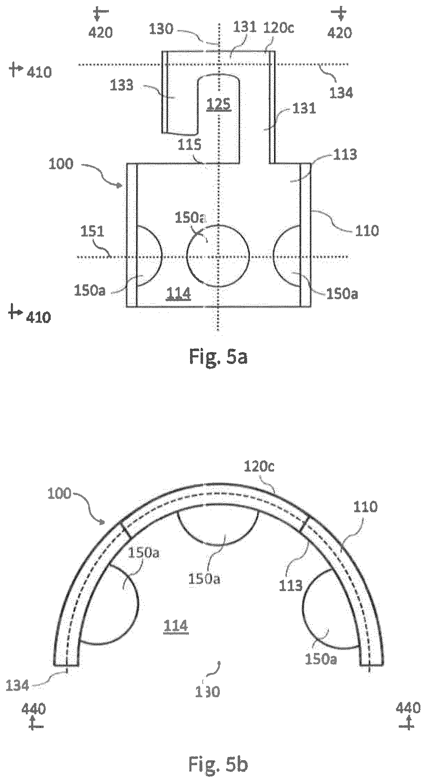

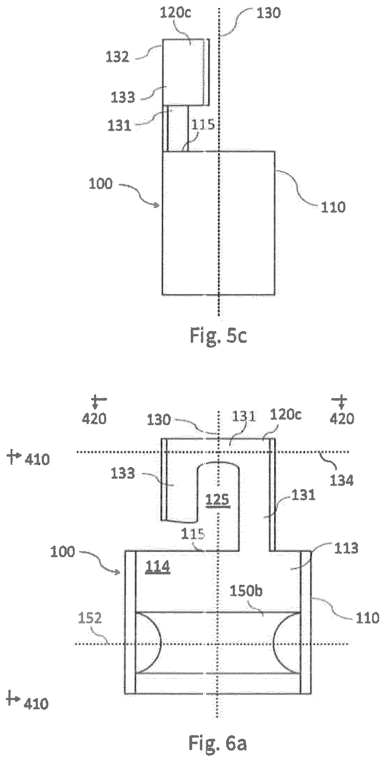

**Fig. 5a, Fig. 5b** und Fig. **5c** zeigen eine schematische Darstellung einer fünften, nicht beanspruchten Ausführungsform einer Zugentlastungsvorrichtung 100. Diese entsprechen nicht dem Hauptanspruch, da die Befestigungseinrichtung keine Nut aufweist, die sich in Querrichtung erstreckt. Der Körper 110 und die Eingriffseinrichtung der fünften Ausführungsform sind im Wesentlichen identisch mit dem Körper 110 bzw. mit der Eingriffseinrichtung der oben beschriebenen ersten Ausführungsform der erfindungsgemäßen Zugentlastungsvorrichtung 100, wie in **Fig. 1a, Fig. 1b** und **Fig. 1c** dargestellt.

Die Befestigungseinrichtung weist ein hackenförmiges Befestigungselement 120c auf, welches am Körper 110 angeordnet ist und welches den zweiten Stamm 131 den dritten Arm 132 und den Schenkel 133 aufweist. Der dritte Arm 132 ist mit dem zweiten Stamm 131 und dem Schenkel 133 verbunden und ist im Wesentlichen senkrecht zu sowohl dem zweiten Stamm 131 als auch dem Schenkel 133. Der zweite Stamm 131 und der Schenkel 133 sind somit im Wesentlichen zueinander parallel.

Das hackenförmige Befestigungselement 120c ist so angeordnet, dass der zweite Stamm 131 und der Schenkel 133 im Wesentlichen parallel zur Haupterstreckungsrichtung 130 sind. Der erste Arm ist gebogen und erstreckt sich entlang des dritten Kreisbogens 134, welcher im Wesentlichen auf der Haupterstreckungsrichtung 130 zentriert ist. Insbesondere ist das hackenförmige Befestigungselement 120c ein Teil des zweiten Hohlzylinders. Nach der fünften Ausführungsform der erfindungsgemäßen Zugentlastungsvorrichtung 100 entspricht somit der zweite Hohlzylinder dem vierten Hohlzylinder.

Der zweite Stamm 131, der dritte Arm 132 und der Schenkel 133 bilden mit dem dritten Bereich 115 des Körpers 110 die dritte Ausnehmung 135.

Im montierten Zustand der Zugentlastungsvorrichtung 100 mit der Endkappe, sind die Haupterstreckungsrichtung 130 des Körpers 110 und die Längsachse der Endkappe im Wesentlichen parallel zueinander angeordnet und ein Haltefaden ist an der Befestigungseinrichtung, d.h. am hackenförmigen Befestigungselement 120c, wenigstens kraftschlüssig befestigbar.

Insbesondere kann wenigstens ein Teil des Haltefadens um den zweiten Stamm 131, den dritten Arm 132 und/oder den Schenkel 133 einmal oder mehrmals gewunden werden. Außerdem wird der Haltefaden in der dritten Ausnehmung 135 einmal oder mehrmals eingeführt. Dadurch wird der Haltefaden mit dem hackenförmigen Befestigungselement 120c wenigstens durch die Reibung zwischen dem Haltefaden und dem hackenförmigen Befestigungselement 120c kraftschlüssig befestigt.

Im montierten Zustand der Zugentlastungsvorrichtung mit der Endkappe können die Oberfläche 113 und der Aufnahmeabschnitt der Endkappe eine Formschluss- und/oder Kraftschlussverbindung bereitstellen. Beispielsweise greifen der Aufnahmebereich 114 und der Aufnahmeabschnitt mindestens teilweise formschlüssig ineinander. In diesem Fall weist die Eingriffseinrichtung auch die Oberfläche 113 auf.

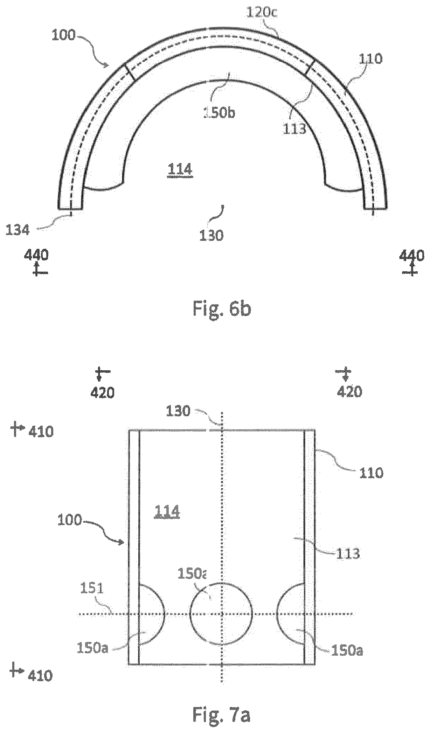

**Fig. 6a** und Fig. **6b** zeigen eine schematische Darstellung einer sechsten Ausführungsform der erfindungsgemäßen Zugentlastungsvorrichtung 100. Der Körper 110 und die Befestigungseinrichtung der sechsten Ausführungsform sind im Wesentlichen identisch mit dem Körper 110 bzw. mit der Befestigungseinrichtung der oben beschriebenen fünften Ausführungsform der erfindungsgemäßen Zugentlastungsvorrichtung 100, wie in **Fig. 5a, Fig. 5b** und **Fig. 5c** dargestellt.

Außerdem ist die Eingriffseinrichtung der sechsten Ausführungsform im Wesentlichen identisch mit der Eingriffseinrichtung der oben beschriebenen zweiten Ausführungsform der erfindungsgemäßen Zugentlastungsvorrichtung 100, wie in **Fig. 2a****,** und **Fig. 2b** dargestellt.

Die Darstellung der sechsten Ausführungsform der erfindungsgemäßen Zugentlastungsvorrichtung 100 entlang der Linie 410-410 von **Fig. 6a** ist im Wesentlichen identisch mit der Darstellung der fünften Ausführungsform der erfindungsgemäßen Zugentlastungsvorrichtung 100 entlang der Linie 410-410 von **Fig.** 5a.

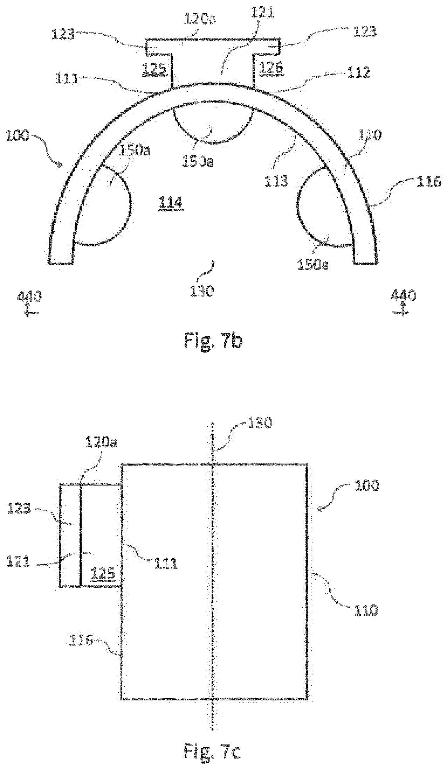

**Fig. 7a****,** **Fig. 7b** und Fig. **7c** zeigen eine schematische Darstellung einer siebten, nicht beanspruchten Ausführungsform einer Zugentlastungsvorrichtung 100. Diese entsprechen nicht dem Hauptanspruch, da die Befestigungseinrichtung keine Nut aufweist, die sich in Querrichtung erstreckt. Der Körper 110 und die Eingriffseinrichtung der siebten Ausführungsform sind im Wesentlichen identisch mit dem Körper 110 bzw. mit der Eingriffseinrichtung der oben beschriebenen ersten Ausführungsform der erfindungsgemäßen Zugentlastungsvorrichtung 100, wie in **Fig. 1a, Fig. 1b** und **Fig. 1c** dargestellt.

Die Befestigungseinrichtung weist ein T-förmiges Befestigungselement 120a auf, welches am Körper 110 angeordnet ist und welches den ersten Stamm 121 den ersten Arm 122 und den zweiten Arm 123 aufweist. Insbesondere ist das T-förmige Befestigungselement 120a an einer Außenfläche 116 des Körpers 110 angeordnet, wobei die Außenfläche 116 die Fläche des Körpers 110 ist, die nach Außen in Bezug auf den Aufnahmebereich 114 angeordnet ist.

Der erste Arm 122 und der zweite Arm 123 sind mit dem ersten Stamm 121 verbunden und im Wesentlichen gegenüberliegend zueinander ausgerichtet. Außerdem sind diese zwei Arme 122, 123 im Wesentlichen senkrecht zum ersten Stamm 121. Das T-förmige Befestigungselement 120a ist so angeordnet, dass diese zwei Arme 122, 123 im Wesentlichen parallel zur Haupterstreckungsrichtung 130 sind.

Der erste Arm 122 und der erste Stamm 121 bilden mit dem ersten Bereich 111 des Körpers 110 die erste Ausnehmung 125. Außerdem bilden der zweiten Arm 123 und der erste Stamm 121 mit dem zweiten Bereich 112 des Körpers 110 die zweite Ausnehmung 126.

Im montierten Zustand der Zugentlastungsvorrichtung 100 mit der Endkappe, sind die Haupterstreckungsrichtung 130 des Körpers 110 und die Längsachse der Endkappe im Wesentlichen parallel zueinander angeordnet und ein Haltefaden ist an der Befestigungseinrichtung, d.h. am T-förmigen Befestigungselement 120a, wenigstens kraftschlüssig befestigbar.

Insbesondere kann wenigstens ein Teil des Haltefadens um den ersten Stamm 121, den ersten Arm 122 und/oder den zweiten Arm 123 einmal oder mehrmals gewunden werden. Außerdem wird der Haltefaden in der ersten Ausnehmung 125 und/oder zweiten Ausnehmung 126 einmal oder mehrmals eingeführt. Dadurch wird der Haltefaden mit dem T-förmigen Befestigungselement 120a wenigstens durch die Reibung zwischen dem Haltefaden und dem T-förmigen Befestigungselement 120a kraftschlüssig befestigt.

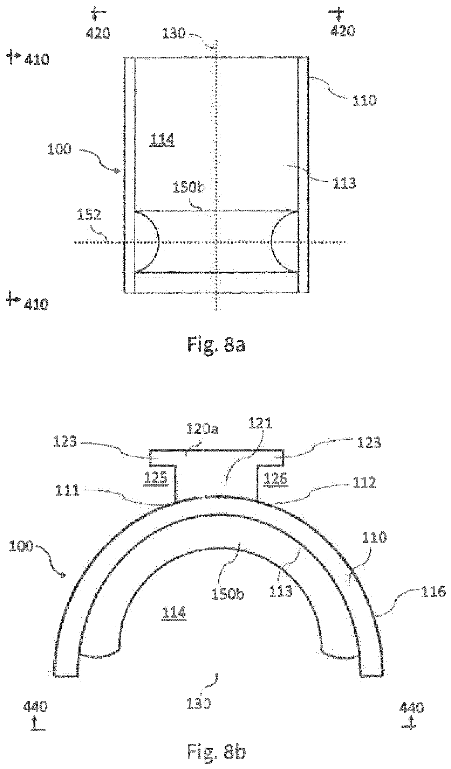

**Fig. 8a** und **Fig. 8b** zeigen eine schematische Darstellung einer achten, nicht beanspruchten Ausführungsform einer Zugentlastungsvorrichtung 100. Diese entsprechen nicht dem Hauptanspruch, da die Befestigungseinrichtung keine Nut aufweist, die sich in Querrichtung erstreckt. Der Körper 110 und die Befestigungseinrichtung der achten Ausführungsform sind im Wesentlichen identisch mit dem Körper 110 bzw. mit der Befestigungseinrichtung der oben beschriebenen siebten Ausführungsform der erfindungsgemäßen Zugentlastungsvorrichtung 100, wie in **Fig. 7a****,** **Fig. 7b** und **Fig. 7c** dargestellt.

Außerdem ist die Eingriffseinrichtung der achten Ausführungsform im Wesentlichen identisch mit der Eingriffseinrichtung der oben beschriebenen zweiten Ausführungsform der erfindungsgemäßen Zugentlastungsvorrichtung 100, wie in **Fig. 2a****,** und **Fig. 2b** dargestellt.

Die Darstellung der achten Ausführungsform der erfindungsgemäßen Zugentlastungsvorrichtung 100 entlang der Linie 410-410 von **Fig. 8a** ist im Wesentlichen identisch mit der Darstellung der siebten Ausführungsform, der erfindungsgemäßen Zugentlastungsvorrichtung 100 entlang der Linie 410-410 von **Fig.** 7a.

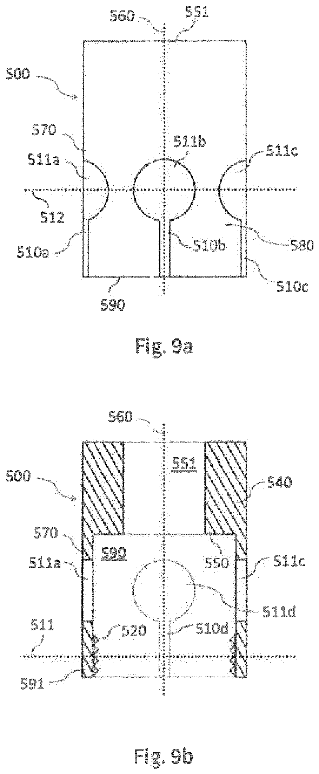

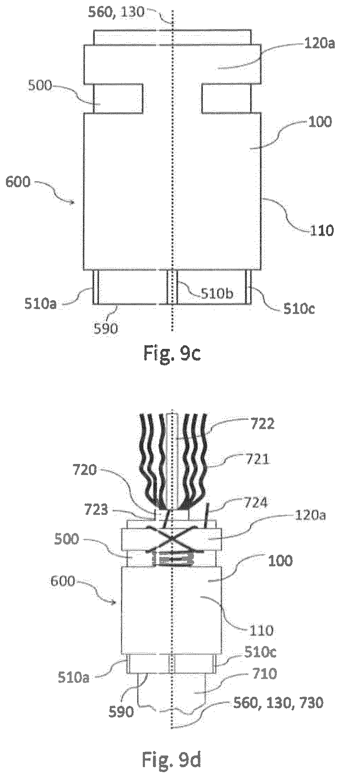

**Fig. 9a** und **Fig. 9b** zeigen eine schematische Darstellung der Endkappe bzw. des Längsschnitts der Endkappe 500 der ersten Ausführungsform der erfindungsgemäßen Vorrichtung 600, welche die Endkappe 500 und die oben beschriebene erste Ausführungsform der erfindungsgemäßen Zugentlastungsvorrichtung 100 (vgl. z.B. **Fig. 1a, Fig. 1b****,** **Fig. 1c** und **Fig.** 9c).

Die Endkappe 500 weist eine zylindrische Grundform auf und erstreckt sich entlang der Längsachse 560. Die Endkappe 500 umfasst den Endkappenmantel 530 und entlang der Längsachse 560 das innenliegende, zylindrische Aufnahmeteil 590 mit der endseitigen Stirnfläche 550 und den Bedienkopf 540. Der Bedienkopf 540 umfasst die konzentrische Öffnung zur Durchführung eines Glasfaser-Bündeladerkabels, wobei die konzentrische Öffnung im Wesentlichen entlang der Längsachse 560 sich erstreckt und eine zylindrische Grundform aufweist.

Das Aufnahmeteil 590 weist die erste 510a, die zweite 510b, die dritte 510c und die vierte 510d seitliche Schlitzung auf, wobei die Stückzahl der seitlichen Schlitzungen 510b-510d aber auch variieren kann. Die seitlichen Schlitzungen 510a-510d erstrecken sich im Wesentlichen parallel zur Längsachse 560 und nur teilweise über die Höhe des Endkappenmantels 530. Außerdem weisen die seitlichen Schlitzungen 510b-510d am Endpunkt innerhalb der Kontur des Endkappenmantels eine Entspannungsbohrung 511a-511d auf.

Nach der ersten Ausführungsform der erfindungsgemäßen Vorrichtung 600 ist das Element der Formschlussverbindung zur Wechselwirkung mit dem abzudeckenden Rohr ein Innengewinde 520, welches sich entlang eines dritten in Bezug auf die Längsachse axialen Abschnitt 521 der Endkappe 500 erstreckt.

Das Innengewinde 520 ist im Endbereich 591 des Aufnahmeteils 590 angeordnet und kann als selbstschneidendes Gewinde ausgestaltet sein. Dabei kann das Innengewinde 520 nicht nur im Endbereich 591, sondern auch an anderen Stellen Aufnahmeteils 590 angeordnet sein, und es können auch mehrere Innengewinde 520 im Aufnahmeteil590 angebracht werden. Das Innengewinde 520 kann ein- oder mehrgängig gestaltet sein.

Die Endkappeneingriffseinrichtung umfasst die Entspannungsbohrungen 511a-511d welche z.B. entlang des zweiten in Bezug auf die Längsachse axialen Abschnittes 512 angeordnet sind. Die Form der Entspannungsbohrungen 511a-511d entspricht der Form der Rundrillen 150a der Zugentlastungsvorrichtung 100 (vgl. z.B. **Fig. 1a** und **Fig. 1b****),** so dass in montiertem Zustand der Endkappe 500 mit der Zugentlastungsvorrichtung 100 jede Rundrille 150a formschlüssig in einer der Entspannungsbohrungen 511a-511d greift, um die o.g. Verschiebung- und Drehung-verhindernde Formschluss- und/oder Kraftschlussverbindung bereitzustellen.

Weist die Eingriffseinrichtung der Zugentlastungsvorrichtung 100 die drei Vorsprünge (nicht dargestellt) auf, umfasst die Endkappeneingriffseinrichtung die seitlichen Schlitzungen 510b-510d. Die Form der seitlichen Schlitzungen 510b-510d entspricht wenigsten teilweise der Form der Vorsprünge der Zugentlastungsvorrichtung 100, so dass im montierten Zustand der Endkappe 500 mit der Zugentlastungsvorrichtung 100 jeder Vorsprung formschlüssig in einer der seitlichen Schlitzungen 510b-510d greift, um die o.g. Verschiebungs- und Drehungs-verhindernde Formschluss- und/oder Kraftschlussverbindung zu verstärken.

Die Endkappe umfasst die Aufnahmeabschnitt 580, welcher die Kontaktfläche 570 aufweist. Die Form der Oberfläche 113 der Zugentlastungsvorrichtung 100 entspricht wenigstens teilweise der Form des Aufnahmeabschnittes 580 insbesondere der Kontaktfläche 570 der Endkappe 500. Im montierten Zustand der Zugentlastungsvorrichtung 100 mit der Endkappe 500 ist die Oberfläche 113 wenigstens teilweise in Kontakt mit der Kontaktfläche 570 der Endkappe 500 angeordnet und der Aufnahmeabschnitt 580 der Endkappe ist in dem Aufnahmebereich 580 aufgenommen.

Im montierten Zustand der Zugentlastungsvorrichtung 100 mit der Endkappe 500, können die Oberfläche 113 und der Aufnahmeabschnitt 580 eine Formschluss- und/oder Kraftschlussverbindung bereitstellen. Beispielsweise greifen der Aufnahmebereich 114 und der Aufnahmeabschnitt 580 mindestens teilweise formschlüssig ineinander. In diesem Fall weist die Endkappeneingriffseinrichtung auch den Aufnahmeabschnitt 580 auf.

**Fig. 9c** zeigt eine schematische Darstellung der ersten Ausführungsform der erfindungsgemäßen Vorrichtung 600. Die Haupterstreckungsrichtung 130 des Körpers 110 und die Längsachse 560 der Endkappe 130 sind im Wesentlichen parallel zueinander angeordnet und stimmen insbesondere miteinander überein.

Die Oberfläche 113 ist wenigstens teilweise in Kontakt mit der Kontaktfläche 570 der Endkappe 500 angeordnet und die Aufnahmeabschnitt 580 der Endkappe ist in dem Aufnahmebereich 580 aufgenommen.

Die Rundrillen 150a und die Entspannungsbohrungen 511a-511d wirken zusammen und stellen eine Formschluss- und/oder Kraftschlussverbindung bereit, welche eine Verschiebung der Zugentlastungsvorrichtung 100 in Bezug auf die Endkappe 500 entlang der Haupterstreckungsrichtung 130 und eine Drehung der Zugentlastungsvorrichtung 100 in Bezug auf die Endkappe um die Haupterstreckungsrichtung 130 wenigstens teilweise verhindern. Insbesondere greift jede Rundrille 150a formschlüssig in einem der Entspannungsbohrungen 511a-511d, um die o.g. Verschiebung-verhindernde Formschluss- und/oder Kraftschlussverbindung bereitzustellen.

Die Oberfläche 113 und der Aufnahmeabschnitt 580 der Endkappe 570 können eine Formschluss-und/oder Kraftschlussverbindung bereitstellen. Beispielsweise greifen der Aufnahmebereich 114 und der Aufnahmeabschnitt 580 mindestens teilweise formschlüssig ineinander.

**Fig. 9d** zeigt eine schematische Darstellung der ersten Ausführungsform der erfindungsgemäßen Vorrichtung 600 im montierten Zustand mit einem Glasfaser-Kabel.

Das Glasfaser-Kabel erstreckt sich entlang einer Kabelachse 730 und weist ein Glasfaser-Bündeladerkabel 720 und ein Glasfaser-Verlegerohr 710 auf, welches das Glasfaser-Bündeladerkabel 720 teilweise seitlich umgibt. Das Glasfaser-Bündeladerkabel 720 umfasst eine Vielzahl von Glasfasern 721, welche durch einen Kabelmantel 723 seitlich umgeben werden. Das Glasfaser-Bündeladerkabel 720 kann auch einen Mandrin 722, eine Reißleine (nicht dargestellt), welche das Abmanteln des Glasfaser-Bündeladerkabels 720 vereinfacht, und eine Verstärkungsfaser 724, welche zur Verstärkung des Glasfaser-Bündeladerkabels dient, aufweisen.

Nach der ersten Ausführungsform der Erfindung dient die Verstärkungsfaser 724 als Haltefaden und ist beispielsweise ein Glas-, Kohle-, Aramid-, und/oder Kohle/Aramid-Band. Außerdem kann der Haltefaden ein Glas-, Kohle-, Aramid- und/oder Kohle/Aramid-Roving sein.

Im montierten Zustand des Glasfaser-Kabels mit der erfindungsgemäßen Vorrichtung 600 stimmen die Längsachse 560 und die Kabelachse 730 in Wesentlichen miteinander überein. Ein Stirnende des Glasfaser-Bündeladerkabels 720 erstreckt sich durch die konzentrische Öffnung 551 und ein Stirnende des Glasfaser-Verlegerohrs 710 ist in dem Aufnahmeteil 590 aufgenommen. Das Stirnende des Glasfaser-Bündeladerkabels 720 ist abgemantelt.

Das Aufnahmeteil 590 ist mit einem Stirnende des Glasfaser-Verlegerohrs formschlüssig und/oder kraftschlüssig mittels des Gewindes 520 verbunden. In diesem Fall ist die Endkappe 550 mit dem Glasfaser-Verlegerohr lösbar fest verbunden, d.h. ist beispielsweise an dem Stirnende des Glasfaser-Verlegerohrs eingeschraubt.

Das Innengewinde 520 im Bereich des Aufnahmeteils 590 sorgt insbesondere dafür, dass die Endkappe 500 ohne weitere Vorbereitung direkt auf das Glasfaser-Verlegerohr 710 aufgeschraubt werden kann. Um einen guten Abschluss des Glasfaser-Verlegerohrs 710 zu erreichen, kann die Endkappe 500 soweit eingeschraubt werden, dass das Glasfaser-Verlegerohr 710 an der Stirnfläche 550 des Aufnahmeteils 590 ansteht.

Im montierten Zustand des Glasfaser-Kabels mit der erfindungsgemäßen Vorrichtung 600 ist ein Teil der Verstärkungsfaser 724 um den ersten Stamm 121, den ersten Arm 122 und den zweiten Arm 123 mehrmals gewunden und in der ersten 125 und in der zweiten 126 Ausnehmung mehrmals eingeführt. Dadurch wird der Haltefaden mit dem T-förmigen Befestigungselement 120a wenigstens durch die Reibung zwischen dem Haltefaden und dem T-förmigen Befestigungselement 120a kraftschlüssig befestigt.

### Bezugszeichenliste

| | | | |
|---|---|---|---|
| 100 | Zugenntlastungsvorrichtung; | 150a | Rundrillen; |
| 110 | Körper; | 150b | Vorsprung; |
| 111 | erster Bereich des Körpers; | 151 | erster axialer Abschnitt; |
| 112 | zweiter Bereich des Körpers; | 152 | zweiter axialer Abschnitt; |
| 113 | Oberfläche des Körpers; | 500 | Endkappe; |
| 114 | Aufnahmebereich; | 510a-d | Seitlichen Schlitzungen; |
| 115 | dritter Bereich des Körpers; | 511a-d | Entspannungsbohrungen; |
| 116 | Außenfläche des Körpers; | 512 | zweiter axialer Abschnitt; |
| 120a | T-förmiges Befestigungselement; | 520 | Innengewinde; |
| 120b | L-förmigen Befestigungselement; | 521 | dritter axialer Abschnitt; |
| 120c | hackenförmiges Befestigungselement; | 530 | Endkappenmantel; |
| | | 540 | Bedienkopf; |
| 121 | erster Stamm; | 550 | Endseitige Stirnfläche; |
| 122 | erster Arm; | 551 | konzentrische Öffnung; |
| 123 | zweiter Arm; | 560 | Längsachse; |
| 124 | zweiter Kreisbogen; | 570 | Kontaktfläche; |
| 125 | erste Ausnehmung; | 580 | Aufnahmeabschnitt; |
| 126 | zweite Ausnehmung; | 590 | Aufnahmeteil; |
| 127 | erste Stirnkante; | 591 | Endbereich; |
| 128 | zweite Stirnkante; | 710 | Glasfaser-Verlegerohr; |
| 129 | erste Phase; | 720 | Glasfaser-Bündeladerkabel; |
| 130 | Haupterstreckungsrichtung; | 721 | Glasfasern; |
| 131 | zweiter Stamm; | 722 | Mandrin; |
| 132 | dritter Arm; | 723 | Kabelmantel; |
| 133 | Schenkel; | 730 | Kabelachse; |
| 134 | dritter Kreisbogen; | 724 | Verstärkungsfaser |
| 135 | dritte Ausnehmung; | | |

## Patentansprüche

1. Vorrichtung (600) umfassend eine Zugentlastungsvorrichtung (100) und eine Endkappe (500), wobei die Zugentlastungsvorrichtung (100) an der Endkappe (500) montierbar ist, wobei die Endkappe (500) an einem Glasfaser-Kabel montierbar und mit einem Glasfaser-Verlegerohr des Glasfaser-Kabels lösbar fest verbindbar ist,
die Endkappe (500) einen Endkappenverbindungbereich aufweist und sich entlang einer Längsachse (560) erstreckt, wobei die Endkappe (500) über den Endkappenverbindungbereich mit der Zugentlastungsvorrichtung (100) verbunden ist,
die Zugentlastungsvorrichtung einen Körper (110), welcher sich entlang einer Haupterstreckungsrichtung (130) erstreckt, eine Befestigungseinrichtung (120a, 120b, 120c) und eine Eingriffseinrichtung (150a, 150b) umfasst, wobei
die Eingriffseinrichtung (150a, 150b) derart ausgestaltet und an dem Körper (110) angeordnet ist, dass im montierten Zustand der Zugentlastungsvorrichtung (100) mit der sich entlang der Längsachse (560) erstreckenden Endkappe (500) die Eingriffseinrichtung (150a, 150b) mit dem entsprechenden Endkappenverbindungsbereich der Endkappe (500), welcher in der Form einer Endkappeneingriffseinrichtung (511a-511d) ist, zusammenwirken und eine Formschluss-und/oder Kraftschlussverbindung bereitstellen kann, welche eine Verschiebung der Zugentlastungsvorrichtung (100) in Bezug auf die Endkappe (500) wenigstens entlang der Haupterstreckungsrichtung (130) wenigstens teilweise verhindern kann, wobei im montierten Zustand der Zugentlastungsvorrichtung (100) mit der Endkappe (500), die Haupterstreckungsrichtung (130) des Körpers (110) und die Längsachse (560) der Endkappe (500) im Wesentlichen parallel zueinander angeordnet sind,
die Befestigungseinrichtung (120a, 120b, 120c) wenigstens eine erste Nut aufweist, welche sich im Wesentlichen entlang einer Querrichtung erstreckt und ein Haltefaden (724) des Glasfaser-Kabels an der Befestigungseinrichtung (120a, 120b, 120c) wenigstens kraftschlüssig befestigt werden kann,
**dadurch gekennzeichnet, dass**
die Eingriffseinrichtung (150a, 150b) wenigstens ein Rastelement aufweist, das sich entlang einer Richtung erstreckt, welche sich im Wesentlichen senkrecht zur Haupterstreckungsrichtung (130) des Körpers (110) erstreckt.

2. Vorrichtung (600) nach Anspruch 1, wobei die Eingriffseinrichtung (150a, 150b) wenigstens eine Rille, eine Rundrille (150a) oder einen Vorsprung aufweist.

3. Vorrichtung (600) nach Anspruch 1 oder 2, wobei die Eingriffseinrichtung (150a, 150b) eine Nut und/oder einen Vorsprung (150b) aufweist, welcher sich entlang eines in Bezug auf die Haupterstreckungsrichtung (130) axialen Abschnittes (152) erstrecken.

4. Vorrichtung (600) nach Anspruch 1 oder 2, wobei die Eingriffseinrichtung (150a, 150b) derart ausgestaltet und an dem Körper (110) angeordnet ist, dass im montierten Zustand der Zugentlastungsvorrichtung (100) mit der Endkappe (500), die Eingriffseinrichtung (150a, 150b) mit der Endkappeneingriffseinrichtung (511a-511d) der Endkappe (500) zusammenwirken und eine Formschluss- und/oder Kraftschlussverbindung bereitstellen kann, welche eine Drehung der Zugentlastungsvorrichtung (100) in Bezug auf die Endkappe (500) um die Haupterstreckungsrichtung (130) wenigstens teilweise verhindern kann.

5. Vorrichtung (600) nach einem der vorhergehenden Ansprüche, wobei der Körper (110) eine Oberfläche (113) aufweist und eingerichtet ist, dass im montierten Zustand der Zugentlastungsvorrichtung (100) mit der Endkappe (500) die Oberfläche (113) wenigstens teilweise in Kontakt mit der Endkappe (500) angeordnet ist.

6. Vorrichtung (600) nach Anspruch 5, wobei der Körper (110) einen Aufnahmebereich (114) bildet, welcher wenigstens teilweise durch die Oberfläche (113) begrenzt und eingerichtet ist, dass im montierten Zustand der Zugentlastungsvorrichtung (100) mit der Endkappe (500) wenigstens ein Aufnahmeabschnitt (580) der Endkappe (500) in dem Aufnahmebereich (114) aufgenommen ist.

7. Vorrichtung (600) nach Anspruch 6, wobei die Oberfläche (113) eingerichtet ist, dass im montierten Zustand der Zugentlastungsvorrichtung (100) mit der Endkappe (500) die Oberfläche (113) und der Aufnahmeabschnitt (580) der Endkappe (500) eine Formschluss-und/oder Kraftschlussverbindung bereitstellen.

8. Vorrichtung (600) nach einem der vorhergehenden Ansprüche, wobei die Befestigungseinrichtung (120a, 120b, 120c) wenigstens eine zweite Nut aufweist, welche sich im Wesentlichen parallel zur Haupterstreckungsrichtung (130) der Zugentlastungsvorrichtung (100) erstreckt.

9. Verwendung der Vorrichtung (600) nach einem der vorhergehenden Ansprüche für ein Glasfasern-Verlegerohr (710), insbesondere zur Zugentlastung von Lichtwellenleiterkabeln.

## Claims

1. A device (600), comprising a strain relief device (100) and an end cap (500), wherein the strain relief device (100) is mountable on the end cap (500), wherein the end cap (500) is mountable on a fibre optic cable and is detachably fixed to a fibre optic conduit of the fibre optic cable,
the end cap (500) has an end cap connection region and extends along a longitudinal axis (560), wherein the end cap (500) is connected to the strain relief device (100) via the end cap connection region,
the strain relief device comprises a body (110), extending along a main extension direction (130), a fastening apparatus (120a, 120b, 120c) and an engagement apparatus (150a, 150b), wherein
the engagement apparatus (150a, 150b) is configured and arranged on the body (110) such that, in the assembled state of the strain relief device (100) with the end cap (500), extending along the longitudinal axis (560), the engagement apparatus (150a, 150b) can interact with the corresponding end cap connection region of the end cap (500), which is in the form of an end cap engagement apparatus (511a-511d), and provide a positive locking and/or force locking connection, which can at least partially prevent a displacement of the strain relief device (100) with respect to the end cap (500) at least along the main extension direction (130), wherein
in the assembled state of the strain relief device (100) with the end cap (500), the main extension direction (130) of the body (110) and the longitudinal axis (560) of the end cap (500) are arranged substantially parallel to each other,
the fastening apparatus (120a, 120b, 120c) has at least one first groove, which extends substantially along a transverse direction and to which a retaining thread (724) of the fibre optic cable can be attached to the fastening apparatus (120a, 120b, 120c) at least in a force-fit manner,
**characterized in that**
the engagement apparatus (150a, 150b) has at least one locking element, which extends along a direction, which is substantially perpendicular to the main extension direction (130) of the body (110).

2. The device (600) according to claim 1, wherein the engagement apparatus (150a, 150b) has at least one groove, one circular groove (150a) or one projection.

3. The device (600) according to claim 1 or 2, wherein the engagement apparatus (150a, 150b) has a groove and/or a projection (150b) which extends along an axial section (152) with respect to the main extension direction (130).

4. The device (600) according to claim 1 or 2, wherein the engagement apparatus (150a, 150b) is configured and arranged on the body (110) such that, in the assembled state of the strain relief device (100) with the end cap (500), the engagement apparatus (150a, 150b) can interact with the end cap engagement apparatus (511a-511d) of the end cap (500) and provide a positive locking and/or force locking connection, which can at least partially prevent the strain relief device (100) from rotating with respect to the end cap (500) about the main extension direction (130).

5. The device (600) according to any one of the preceding claims, wherein the body (110) has a surface (113) and is adapted such that, in the assembled state of the strain relief device (100) with the end cap (500), the surface (113) is at least partially arranged in contact with the end cap (500).

6. The device (600) according to claim 5, wherein the body **(110)** forms a receiving region (114) which is at least partially limited by the surface (113) and is adapted such that, in the assembled state of the strain relief device (100) with the end cap (500), at least one receiving section (580) of the end cap (500) is received in the receiving region (114).

7. The device (600) according to claim 6, wherein the surface (113) is adapted such that, in the assembled state of the strain relief device (100) with the end cap (500), the surface (113) and the receiving section (580) of the end cap (500) provide a positive locking and/or force locking connection.

8. The device (600) according to any one of the preceding claims, wherein the fastening apparatus (120a, 120b, 120c) has at least one second groove, which extends substantially parallel to the main extension direction (130) of the strain relief device (100).

9. A use of the device (600) according to any one of the preceding claims for a fibre optic conduit (710), in particular for strain relief of fibre optic cables.

## Revendications

1. Dispositif (600) comprenant un dispositif de réduction de tension (100) et un capuchon d'extrémité (500), dans lequel le dispositif de réduction de tension (100) peut être monté sur le capuchon d'extrémité (500), dans lequel le capuchon d'extrémité (500) peut être monté sur un câble à fibres optiques et peut être relié d'un seul tenant de manière détachable à un tube de pose de fibres optiques du câble à fibres optiques,
le capuchon d'extrémité (500) présente une zone de connexion de capuchon d'extrémité et s'étend le long d'un axe longitudinal (560), dans lequel le capuchon d'extrémité (500) est relié au dispositif de réduction de tension (100) via la zone de liaison de capuchon d'extrémité,
le dispositif de réduction de tension comprend un corps (110) s'étendant le long d'une direction d'extension principale (130), un dispositif de fixation (120a, 120b, 120c) et un dispositif d'engagement (150a, 150b), dans lequel
le dispositif d'engagement (150a, 150b) est configuré et disposé sur le corps (110) de manière à ce que, à l'état monté du dispositif de réduction de tension (100) avec le capuchon d'extrémité (500) s'étendant le long de l'axe longitudinal (560), le dispositif d'engagement (150a, 150b) puisse interagir avec la zone de liaison de capuchon d'extrémité correspondante du capuchon d'extrémité (500), qui est sous la forme d'un dispositif d'engagement de capuchon d'extrémité (511a-511d) et fournir une liaison par complémentarité de forme et/ou par force, qui peut empêcher au moins partiellement un déplacement du dispositif de réduction de tension (100) par rapport au capuchon d'extrémité (500) au moins le long de la direction d'extension principale (130), dans lequel
à l'état monté du dispositif de réduction de tension (100) avec le capuchon d'extrémité (500), la direction d'extension principale (130) du corps (110) et l'axe longitudinal (560) du capuchon d'extrémité (500) sont disposés sensiblement parallèlement l'un à l'autre,
le dispositif de fixation (120a, 120b, 120c) présente au moins une première rainure s'étendant sensiblement le long d'une direction transversale et un fil de maintien (724) du câble à fibres optiques peut être fixé au moins par force au dispositif de fixation (120a, 120b, 120c),
**caractérisé en ce que**
le dispositif d'engagement (150a, 150b) présente au moins un élément d'encliquetage s'étendant le long d'une direction s'étendant sensiblement perpendiculairement à la direction d'extension principale (130) du corps (110).

2. Dispositif (600) selon la revendication 1, dans lequel le dispositif d'engagement (150a, 150b) présente au moins une encoche, une encoche ronde (150a) ou une saillie.

3. Dispositif (600) selon la revendication 1 ou la revendication 2, dans lequel le dispositif d'engagement (150a, 150b) présente une rainure et/ou une saillie (150b) s'étendant le long d'une portion axiale (152) par rapport à la direction d'extension principale (130).

4. Dispositif (600) selon la revendication 1 ou la revendication 2, dans lequel le dispositif d'engagement (150a, 150b) est configuré et disposé sur le corps (110) de manière à ce que, à l'état monté du dispositif de réduction de tension (100) avec le capuchon d'extrémité (500), le dispositif d'engagement (150a, 150b) puisse interagir avec le dispositif d'engagement de capuchon d'extrémité (511a-511d) du capuchon d'extrémité (500) et fournir une liaison par complémentarité de forme et/ou par force, qui peut empêcher au moins partiellement une rotation du dispositif de réduction de tension (100) par rapport au capuchon d'extrémité (500) autour de la direction d'extension principale (130).

5. Dispositif (600) selon l'une quelconque des revendications précédentes, dans lequel le corps (110) présente une surface (113) et est conçu pour qu'à l'état monté du dispositif de réduction de tension (100) avec le capuchon d'extrémité (500), la surface (113) soit disposée au moins partiellement en contact avec le capuchon d'extrémité (500).

6. Dispositif (600) selon la revendication 5, dans lequel le corps (110) forme une zone de réception (114) qui est au moins partiellement délimitée par la surface (113) et conçue pour qu'à l'état monté du dispositif de réduction de tension (100) avec le capuchon d'extrémité (500), au moins une section de réception (580) du capuchon d'extrémité (500) soit réceptionnée dans la zone de réception (114).

7. Dispositif (600) selon la revendication 6, dans lequel la surface (113) est conçue pour que, à l'état monté du dispositif de réduction de tension (100) avec le capuchon d'extrémité (500), la surface (113) et la section de réception (580) du capuchon d'extrémité (500) fournissent une liaison par complémentarité de forme et/ou par force.

8. Dispositif (600) selon l'une quelconque des revendications précédentes, dans lequel le dispositif de fixation (120a, 120b, 120c) présente au moins une deuxième rainure s'étendant sensiblement parallèlement à la direction d'extension principale (130) du dispositif de réduction de tension (100).

9. Utilisation du dispositif (600) selon l'une quelconque des revendications précédentes pour un tube de pose de fibres optiques (710), notamment pour la réduction de tension de câbles à fibres optiques.
